# EUROPÄISCHE PATENTSCHRIFT

(11) **EP 3 517 271 B1**
(45) Veröffentlichungstag und Bekanntmachung des Hinweises auf die Patenterteilung: **17.02.2021**
(21) Anmeldenummer: 18213723.2
(22) Anmeldetag: 18.12.2018
(51) Int. Cl.: B29C 45/16, B29C 45/14, B29C 45/00

(54) **VERFAHREN ZUR HERSTELLUNG EINES FORMTEILS MIT EINER SICHTFLÄCHE MIT VERSCHIEDENEN OBERFLÄCHENBEREICHEN**
METHOD FOR PRODUCING A MOULDED PART COMPRISING A VISIBLE SURFACE WITH DIFFERENT SURFACE AREAS
PROCÉDÉ DE FABRICATION D'UNE PIÈCE MOULÉE DOTÉE D'UNE SURFACE VISIBLE POURVUE DE DIFFÉRENTES ZONES DE SURFACE

(30) Priorität: 11.01.2018 DE 102018100576
(43) Veröffentlichungstag der Anmeldung: 31.07.2019
(73) Patentinhaber: QIN-Form GmbH & Co. KG, 32051 Herford (DE)
(72) Erfinder: Dinkelmeyer, Volker, 91792 Ellingen (DE)
(74) Vertreter: Beckord & Niedlich Patentanwälte PartG mbB

(56) Entgegenhaltungen:
- EP-A1- 1 120 220
- DE-A1- 19 734 686
- JP-A- 2001 079 879
- US-A1- 2002 140 122

## Beschreibung

Die Erfindung betrifft ein Verfahren zur Herstellung eines Formteils mit einer Sichtfläche mit verschiedenen Oberflächenbereichen, ein entsprechendes Formteil, eine Steuereinrichtung zur Steuerung einer Formeinrichtung zur Herstellung eines entsprechenden Formteils sowie eine Formanlage mit einer Formeinrichtung und einer solchen Steuereinrichtung.

Es ist bekannt, technisch hergestellte Formteile durch spezifische Oberflächen zu gestalten, um ihre optischen, haptischen, akustischen oder funktionalen Eigenschaften zu verbessern. Neben Haushaltswaren kommen unter anderem im Bereich des Automobilbaus vorgefertigte Formteile im Innenraum eines Fahrzeugs zum Einsatz, die spezifische Ober- oder Sichtflächen aufweisen. Derartige Oberflächen können beispielsweise Metalle, Kohlenstofffasergewebe, textile Gewebe, Leder, Holz oder Holzfurniere umfassen. Weiterhin werden oft Kunststoffe als Oberflächenmaterial eingesetzt, und anderem auch solche, die Metalle, Kohlenstofffasergewebe, textile Gewebe, Leder, Holz oder Holzfurniere imitieren. Neben dem Oberflächenmaterial ist dabei das wesentliche Material des Formteils selbst häufig ein Kunststoff.

Die genannten Oberflächen tragen nicht unwesentlich zur Anmutung des Endprodukts beim Besitzer bei. Dies gilt insbesondere für den Innenraum eines Fahrzeugs, welcher die durch den Fahrzeugbesitzer angenommene Wertigkeit des Fahrzeugs nicht unerheblich bestimmt. Entsprechend besteht ein Bedarf an Herstellungsverfahren für Oberflächen von Formteilen, die eine hohe Wertigkeit vermitteln. Dazu zählen in besonderem Maß auch Formteile mit unterschiedlichen Oberflächenbereichen, beispielsweise Oberflächen, die einen attraktiven Materialmix vermitteln. Dies ist aber nur dann erreichbar, wenn die Qualität der Oberfläche des Formteils nicht durch das Herstellungsverfahren beeinträchtigt oder begrenzt wird. Dies gilt insbesondere für die räumlichen Abstände zwischen unterschiedlichen Oberflächenbereichen, welche möglichst so ausgestaltet sein sollten, dass sie kaum oder gar nicht wahrnehmbar sind.

In der DE 100 19 858 A1 wird ein Verfahren beschrieben, bei dem zur Herstellung eines Formteils mit einer Sichtfläche mit verschiedenen Oberflächenbereichen ein erstes und ein zweites Abdeckmaterial in benachbarte Bereiche einer Kavität (Formhohlraum) eines Formwerkzeugs eingebracht werden, so dass die Abdeckmaterialien nebeneinanderliegend angeordnet sind und dabei eine erste Kante eines umgebogenen Kantenbereichs des ersten Abdeckmaterials und eine erste Kante eines umgebogenen Kantenbereichs des zweiten Abdeckmaterials direkt nebeneinander liegen und somit ein Kantenpaar bilden. Als Abdeckmaterialien können Textilmaterialien, Ledermaterialien oder Kunststofffolien oder dergleichen dienen. Es wird dann ein zweiteiliger Schieber des Formwerkzeugs im Formhohlraum ausgefahren, so dass das Kantenpaar von beiden Seiten fest in einem separaten kleinen Teil-Formhohlraum für das Kantenpaar eingeschlossen wird. Dann wird zunächst das Kantenpaar zur Vorfixierung separat hinterspritzt, indem Kunststoffmaterial von hinten in den Teil-Formhohlraum, d.h. im Bereich der Trennstelle, an der die Kanten voreinander liegen, eingespritzt wird. Anschließend wird der Schieber zurückgezogen und die anderen Bereiche des Formteils werden großflächig hinterspritzt.

Bei dem dort beschriebenen Verfahren müssen die Schieberteile mit relativ großem Druck gegen die Abdeckmaterialien gefahren werden, um das Kantenpaar beim Einspritzen des Kunststoffs in dem kleinen, separaten Teil-Formhohlraum zusammenzuhalten. Um dies zu unterstützen und die Abdeckmaterialien beim Hinterspritzen des Kantenpaars in ihrer Form zu halten, ist zudem die Matrize des Formwerkzeugs, in die die beiden Abdeckmaterialien eingelegt werden, an der Trennstelle bzw. dem Übergangsbereich zwischen den beiden Abdeckmaterialien mit einem entlang der Grenze verlaufenden nasenartigen, spitz zulaufenden Vorsprung versehen, an dem sich die Kanten der Abdeckmaterialien rechts und links abstützen, um dann aufeinander zuzulaufen, so dass das fertige Formteil später im Übergangsbereich eine entsprechend geformte, ausgeprägte Fuge aufweist. Aufgrund des Drucks des Schiebers auf die Abdeckmaterialien ist diese Vorgehensweise für Abdeckmaterialien mit empfindlichen Oberflächen nicht optimal.

Im Dokument EP 1 120 200 zeigt ein "auf Stoss" liegendes Kartenpaar zweiter aneinandergrenzende Kunststofffolien, d. h. die "Stirnseiten" der Folienränder. Dieses Kantenpaar wird durch einen einzigen Niederhalter beim Überspritzen abgedeckt, das Kantenpaar wird also nicht überspritzt. Des Weiteren befindet sich der Niederhalter auf der Sichtseite des Formteils und nicht auf der Rückseite.

Dokument US 2002/140122 zeigt zwei aneinandergrenzende Kunststofffolien, deren aneinanderstoßender Bereich sehr breit ist und sich in die Tiefe der Kavität wölbt, siehe Figur 30. Dieser aufgewölbte Bereich wird links und rechts von jeweils einem Niederhalter gegen die von beiden Seiten einfließende Masse so abgeschottet, dass der aufgewölbte Bereich, d. h. das "Kantenpaar", nicht überspritzt wird.

Im Dokument DE 19 734 686 stoßen die eingelegten Folien nicht aneinander.

Es ist deshalb eine Aufgabe der vorliegenden Erfindung, ein verbessertes Verfahren zur Herstellung eines Formteils mit einer Sichtfläche mit verschiedenen Oberflächenbereichen anzugeben.

Diese Aufgabe wird durch ein Verfahren gemäß Patentanspruch 1 gelöst.

Ein erfindungsgemäßes Verfahren zur Herstellung eines Formteils mit einer Sichtfläche mit verschiedenen Oberflächenbereichen wird mit Hilfe einer Formeinrichtung durchgeführt. Unter einer Formeinrichtung ist dabei eine technische Einrichtung zu verstehen, die zur Herstellung des Formteils geeignet ist. Dies kann beispielsweise eine Maschine zur Herstellung von Kunststoffteilen sein, insbesondere eine Spritzgussmaschine, bevorzugt eine Maschine die ein sog. "Insert-Molding"-Verfahren unterstützt. Die Formeinrichtung umfasst eine Matrize und einen Kern mit einer beweglichen Schiebereinrichtung. Insbesondere umfasst die Formeinrichtung eine Matrize und einen Kern einer Spritzgussmaschine, welche beide häufig als Spritzgießwerkzeuge aus Metall mit jeweils mehreren Einzelteilen ausgeführt sind. Die Matrize oder auch "Mutterform" bildet das Negativ einer Außenform, d.h. den später im Endprodukt meist sichtbaren Anteil, also die Sichtfläche, des herzustellenden Formteils. Um die Innenform, d.h. den später meist nicht sichtbaren Teil des Formteils zu bilden, wird der Kern verwendet. Ein Kern und eine Matrize bilden gemeinsam eine Kavität, d.h. eine später im Herstellungsverfahren auszufüllende Hohlform.

Bevorzugt ist die Schiebereinrichtung relativ zum Kern der Formeinrichtung bewegbar. Insbesondere kann die Schiebereinrichtung so bewegt werden, dass sie am Ende der Bewegung aus dem Kern heraussteht oder flächenbündig mit einer Oberfläche des Kerns abschließt. Derartige Schiebereinrichtungen oder auch Schieber sind wie oben erwähnt im Bereich der Spritzgusseinrichtungen bekannt und werden im Allgemeinen für eine Vielzahl an Aufgabenstellungen eingesetzt, beispielsweise um Fertigprodukte aus einer Formeinrichtung am Ende des Herstellungsverfahrens auszuwerfen. Häufig werden derartige Schiebereinrichtungen vorwiegend mit metallischen Materialien und/oder Kunststoffmaterialien umgesetzt.

In dem ersten Schritt des erfindungsgemäßen Verfahrens wird eine Anordnung einer Mehrzahl an Formfolien, welche jeweils mindestens einen umgebogenen Kantenbereich aufweisen, auf der Matrize und/oder auf dem Kern derart angeordnet, dass nach einem Schließen der Formeinrichtung mindestens zwei Formfolien nebeneinanderliegend angeordnet sind, so dass eine erste Kante des umgebogenen Kantenbereichs einer ersten Formfolie und eine erste Kante des umgebogenen Kantenbereichs einer zweiten Formfolie zumindest abschnittsweise direkt nebeneinander bzw. voreinander liegen (also aneinander angrenzen), so dass ein Kantenpaar ausgebildet wird. Eine Mehrzahl steht hierbei für eine Anzahl, die größer als Eins ist. Mit dem erfindungsgemäßen Verfahren kann also ein Formteil hergestellt werden, dessen Sichtfläche zwei, drei oder mehr als drei Oberflächenbereiche umfasst. Insbesondere ist die Herstellung von Formteilen mit zweifarbiger, dreifarbiger oder mehr als dreifarbiger Sichtfläche vorgesehen.

Eine "Formfolie" bezeichnet dabei eine Folie, die bereits vor der Herstellung des Formteils eine vorgegebene räumliche Ausformung und mindestens einen umgebogenen Kantenbereich aufweist. Sie weist bevorzugt zwar gegebenenfalls noch eine gewisse Flexibilität auf, ist aber in sich formstabil. Die Kontur des umgebogenen Kantenbereichs im Querschnitt kann beispielsweise einem Kreisbogen folgen (d. h. einen Radius aufweisen) aber auch andersartige Konturen bzw. Querschnitte aufweisen oder auch scharfkantig ausgebildet sein. Bevorzugt handelt es sich dabei um Kunststoff-Formfolien, besonders bevorzugt um sogenannte "Folien-Inserts". Die Formfolien können eine einseitige oder mehrseitige Bedruckung oder Beschichtung aufweisen. Die Anordnung der Mehrzahl an Formfolien kann manuell oder bevorzugt automatisiert erfolgen.

Die Kontur des umgebogenen Kantenbereichs entlang der Kante, und somit auch die Form der Schiebereinrichtung bzw. des Schiebers entlang der Kante, kann einer geraden Linie folgen aber auch einer beliebigen andersartige Form, z. B. einer Kurve und/oder einem Polygonzug. Die Form kann sich auch abschnittsweise ändern.

In einem zweiten Schritt des erfindungsgemäßen Verfahrens wird ein Schließen der Formeinrichtung durch eine Annäherung der Matrize und des Kerns bewirkt, so dass am Ende des Schließens eine Mehrzahl an Kavitäten entsteht, wobei eine erste Kavität das Kantenpaar umfasst und wobei am Ende des Schließens in einer Endlage der Schiebereinrichtung sich ein vorderer Teil der Schiebereinrichtung in unmittelbarer Nähe des Kantenpaares befindet und eine Stirnseite der Schiebereinrichtung die zweite Formfolie auf der Matrize fixiert. Unter einer unmittelbaren Nähe zum Kantenpaar ist hierbei zu verstehen, dass der vordere Teil bzw. das Ende der Schiebereinrichtung, welches an der zweiten Formfolie anliegt, seitlich direkt am Kantenpaar anliegt oder in einem kurzen Abstand, von z. B. maximal 1 mm, oder bevorzugt weniger, zum Kantenpaar beabstandet ist, um die noch später erläuterte Stabilisierungswirkung auf das Kantenpaar zu erreichen. Dabei kann sich der Abstand zwischen Kantenpaar und Schieberseite entlang des Kantenpaars im Prinzip auch ändern, z. B. dass es abschnittsweise direkt anliegt und abschnittsweise einen kurzen Abstand aufweist.

Das Schließen der Formeinrichtung kann dadurch realisiert werden, dass die Matrize auf den Kern zu bewegt wird oder dass der Kern auf die Matrize zu bewegt wird oder dadurch, dass sowohl die Matrize als auch der Kern aufeinander zu bewegt werden. Die Bewegung der Matrize und/oder des Kerns kann dabei unter anderem hydraulisch, pneumatisch, elektromotorisch oder auch manuell erfolgen. Die erste Kavität wird dabei im Wesentlichen durch räumliche Abschnitte des Kerns, der Schiebereinrichtung und der ersten Formfolie sowie den Randabschnitt der zweiten Formfolie entlang des Kantenpaars begrenzt. Die Endlage der Schiebereinrichtung bezeichnet dabei eine ausgefahrene Position der Schiebereinrichtung, bei der die Schiebereinrichtung aus einer Oberfläche des Kerns, welche der Matrize zugewandt ist, zumindest teilweise heraussteht. Die Schiebereinrichtung wirkt außerhalb des Kerns wie eine schwertartige Begrenzung der ersten Kavität. Bevorzugt ist diese schwertartige Ausgestaltung der Schiebereinrichtung mit einheitlicher Schwertbreite ausgeführt.

Vorteilhafterweise wird die Fixierung der zweiten Formfolie auf der Matrize derart bewirkt, dass die zweite Formfolie nicht beschädigt wird. Dies ist insbesondere deshalb von Bedeutung, weil die der Matrize zugewandte Oberfläche der zweiten Formfolie die später im Endprodukt für den Nutzer sichtbare Oberfläche bzw. Sichtfläche umfasst. Bevorzugt wird der Druck mit dem die Schiebereinrichtung die zweite Formfolie auf der Matrize fixiert so gewählt, dass eine Verformung der zweiten Formfolie minimiert oder vermieden wird. D. h. dass der Schieber an der Formfolie nur ganz leicht anliegt und sich nicht in das Material der Formfolie von hinten eindrückt. Die Endlage der Schiebereinrichtung kann bevorzugt auch so gewählt sein, dass zwischen der zweiten Formfolie und der Stirnseite der Schiebereinrichtung ein Abstand besteht, so dass die zweite Formfolie nach der Fixierung durch die Schiebereinrichtung noch zumindest geringfügig bewegbar ist. Bei einer solchen nur relativ leichten Fixierung, welche noch eine geringfügige Bewegung der Formfolie zulassen würde, ist die Schiebereinrichtung gegenüber der Formfolie nicht spritzdicht abgedichtet. Z. B. könnte der erwähnte Abstand bzw. Spalt zwischen der zweiten Formfolie und der Stirnseite der Schiebereinrichtung maximal 0,08 mm oder bevorzugt noch weniger betragen. Dies kann von der Art der Formfolie und/oder dem zu erzeugenden Formteil abhängen. Bei einer besonders empfindliche Oberfläche der Formfolie kann es wichtig sein, dass die Formfolie nicht in der Matrize bewegbar ist, um z. B. Kratzer beim Verschieben zu vermeiden, in anderen Fällen kann gegebenenfalls eine besonders genauer Farbtrennung erreicht werden, wenn die Formfolie in der Matrize geringfügig bewegbar ist und sich das Kantenpaar direkt an der Seite der Schiebereinrichtung anlegen kann.

In einem weiteren Schritt des erfindungsgemäßen Verfahrens wird ein erstes Trägermaterial in die erste Kavität eingeleitet, d. h. die erste Formfolie wird z. B. hinterspritzt. Bei diesem Schritt bewirkt die sehr enge räumliche Nähe der Schiebereinrichtung zum Kantenpaar eine besonders vorteilhafte mechanische Stützwirkung auf das Kantenpaar. Es kann damit beim Einleiten des ersten Trägermaterials verhindert werden, dass sich das Kantenpaar zumindest in Teilabschnitten übermäßig verformt. Dies ist insbesondere deshalb vorteilhaft, weil eine Verformung des Kantenpaares für den Nutzer des Formteils auf der Sichtfläche sichtbar sein könnte und damit der angestrebten Herstellung hochwertig anmutender Formteile widersprechen würde. Das erste Trägermaterial umschließt dabei das Kantenpaar zumindest von zwei Seiten, nämlich auf der von dem Schieber abgewandten Seite und an den Stirnenden, und eventuell - gegebenenfalls auch nur abschnittsweise - mit einer dünnen Schicht auch auf der zum Schieber gewandten Seite, und sorgt so für einen ersten guten Zusammenhalt der beiden Formfolien während des weiteren Verfahrens oder Prozesses.

Die Schiebereinrichtung im erfindungsgemäßen Verfahren bewirkt damit in besonders vorteilhafter Weise drei wesentliche Funktionen: die Trennung der Kavität zwischen Matrize und Kern in eine erste und eine zweite Kavität, die Fixierung der zweiten Formfolie auf der Matrize sowie die mechanische Stützung des Kantenpaares während des Einleitens des ersten Trägermaterials. Diese Funktionen tragen zum Ziel der Erfindung bei, nämlich ein effizientes, prozesssicheres und einfaches Verfahren zur Herstellung eines Formteils mit einer Sichtfläche mit verschiedenen Oberflächenbereichen anzugeben.

In einem weiteren Schritt des erfindungsgemäßen Verfahrens erfolgt eine Bewegung der Schiebereinrichtung in Richtung des Kerns in eine zurückgezogene Lage der Schiebereinrichtung, so dass eine zweite Kavität erweitert wird. Diese zweite Kavität wird weitestgehend durch räumliche Abschnitte des Kerns, des vorderen Teils der Schiebereinrichtung, der zweiten Formfolie und des ersten Trägermaterials begrenzt. Bevorzugt ist die zurückgezogene Lage der Schiebereinrichtung so ausgestaltet, dass die Stirnseite der Schiebereinrichtung flächenbündig mit der Oberfläche des Kerns, welche der Matrize zugewandt ist, abschließt.

In weiteren Schritten des erfindungsgemäßen Verfahrens erfolgt ein Einleiten eines zweiten Trägermaterials in die zweite Kavität, so dass die zweite Formfolie auch hinterfüllt bzw. hinterspritzt ist.

Erfindungsgemäß werden wie erläutert Formfolien eingesetzt, die vorgeformt wurden und in sich (also ohne äußere Kräfte oder größere Temperatureinwirkungen) formstabil sind. Daher reicht es wie erwähnt aus, wenn sich in der Endlage der Schiebereinrichtung der vordere Teil der Schiebereinrichtung einseitig neben dem Kantenpaar in der (zuvor definierten) unmittelbaren Nähe des Kantenpaares befindet und sich somit der zweiten Formfolie auf der Matrize annähert bzw. leicht fixiert. "Einseitig neben dem Kantenpaar" bedeutet, dass sich der besagte vordere Teil der Schiebereinrichtung neben dem Kantenpaar nur auf einer Seite, also nur entlang der Kante, welche zur zweiten Formfolie gehört, erstreckt.

Das Kantenpaar befindet sich somit in der oben definierten ersten Kavität bzw. Kammer, welche nicht nur das Kantenpaar sondern auch einen Großteil der ersten Formfolie umfasst. Die Schiebereinrichtung "stabilisiert" das Kantenpaar während eines Einbringens von Trägermaterial in diese erste Kavität (z. B. beim Hinterspritzen der ersten Formfolie) nur einseitig bzw. von einer Seite her, d. h. das Kantenpaar wird bewusst zunächst nur ausgehend von einer Seite her mit Trägermaterial beaufschlagt bzw. angespritzt bzw. hinterspritzt. Dabei richtet sich das Kantenpaar exakt aus und es entstehen dadurch genau definierte Farbtrennungen.

Da das Kantenpaar nicht in einer separaten Kavität oder "Kantenpaar-Kammer" von beiden Seiten durch die Schiebereinrichtung eingeschlossen ist und nicht in einem separaten Schritt vorab mit Trägermaterial umspritzt wird, sondern eine Einbettung des Kantenpaars in das Trägermaterial in einem Schritt beim Einleiten des erstes Trägermaterial in die erste Kavität (d. h. beim Hinterspritzen der ersten Formfolie) mit erfolgt, wird eine besonders stabile Ausgestaltung erreicht. Zudem kann der Übergang zwischen den beiden Formfolien auf der Sichtseite der Formfolien bzw. des zu fertigenden Formteils nahezu fugenlos erfolgen, wie dies später noch erläutert wird, d.h. der räumlichen Abstand bzw. ein Spalt bzw. eine Fuge zwischen den beiden Formfolien ist auf der Sichtseite kaum oder gar nicht wahrnehmbar.

Das erste und das zweite Trägermaterial können unterschiedlich sein. Es kann sich aber auch - was in den meisten Anwendungen bevorzugt ist - um ein identisches Material handeln. Bevorzugte Materialien umfassen Materialien der Gruppe Polycarbonat (PC), Acrylnitrit-Butadien-Styrol (ABS), Polyamid (PA), Polyethylen (PE), Polypropylen (PP) oder Polyurethan (PU) oder eine Kombination bzw. Kombinationen dieser Materialien. Besonders bevorzugt sind PC/ABS-Blend-Materialien und reines PC.

Das erste und/oder das zweite Trägermaterial können dabei sogenannte "Slush-Häute" sein, solange sie die ausreichende Formstabilität aufweisen.

Danach erfolgen ein Öffnen der Formeinrichtung und eine Entnahme des hergestellten Formteils aus der Formeinrichtung. Die Entnahme des hergestellten Formteils kann manuell oder bevorzugt automatisiert erfolgen, wobei insbesondere eine Bewegung der Schiebereinrichtung gegenüber dem Kern die Entnahme des Formteils unterstützen kann. Bevorzugt ist keine weitere Bearbeitung des Formteiles erforderlich, jedoch kann das Formteil abschließend auch zusätzlich, z. B. durch Beschneidung, insbesondere in den Randbereichen des Formteils, bearbeitet werden.

Ein erfindungsgemäßes Formteil, welches mit dem vorstehenden erfindungsgemäßen Verfahren erhältlich bzw. herstellbar ist oder hergestellt wurde, weist eine Sichtfläche mit verschiedenen Oberflächenbereichen auf, wobei wie erwähnt am Übergang bzw. an der Trennstelle zwischen den verschiedenen Oberflächenbereichen kein räumlicher Abstand mehr gegeben ist oder zumindest kaum oder bevorzugt gar nicht mehr wahrnehmbar ist, d.h. die Naht am Übergang ist beispielsweise - sofern die beiden Oberflächenbereiche auch dieselbe Haptik aufweisen - haptisch vorzugsweise gar nicht mehr zu erfassen.

Darüber hinaus umfasst die Erfindung eine Steuereinrichtung zur Steuerung einer Formeinrichtung, welche eine Matrize und einen Kern mit einer beweglichen Schiebereinrichtung umfasst, zur Herstellung eines Formteils mit einer Sichtfläche mit verschiedenen Oberflächenbereichen, in einem Fertigungsprozess, bei dem eine Mehrzahl an Formfolien mit jeweils mindestens einem umgebogenen Kantenbereich auf der Matrize und/oder auf dem Kern angeordnet werden, so dass nach einem Schließen der Formeinrichtung mindestens zwei Formfolien nebeneinanderliegend angeordnet sind, so dass eine erste Kante des umgebogenen Kantenbereichs einer ersten Formfolie und eine erste Kante des umgebogenen Kantenbereichs einer zweiten Formfolie zumindest abschnittsweise direkt oder in kurzem Abstand nebeneinander liegen, so dass ein Kantenpaar ausgebildet wird. Diese Positionierung der Formfolien in der Form, d.h. auf der Matrize und/oder auf dem Kern, kann beispielsweise zunächst händisch durch einen Maschinenführer durchgeführt werden. Sofern die Formeinrichtung bzw. eine Anlage, in welcher die Formeinrichtung eingebunden ist, hierfür entsprechend ausgebildet ist bzw. einen entsprechenden Handlings-Automaten, wie einen Roboter oder dergleichen aufweist, kann dies aber auch maschinell erfolgen und insbesondere auch von der Steuereinrichtung initiiert werden.

Ein durch die erfindungsgemäße Steuereinrichtung initiierter Schritt bewirkt dann ein Schließen der Formeinrichtung durch Annäherung der Matrize und des Kerns, so dass am Ende des Schließens eine Mehrzahl an Kavitäten entsteht, wobei eine erste Kavität das Kantenpaar umfasst und wobei am Ende des Schließens in einer Endlage der Schiebereinrichtung sich ein vorderer Teil der Schiebereinrichtung in unmittelbarer Nähe des Kantenpaares und eine Stirnseite der Schiebereinrichtung die zweite Formfolie auf der Matrize fixiert. In einem weiteren Schritt wird nach dem Schließen der Formeinrichtung ein Einleiten eines ersten Trägermaterials in die erste Kavität bewirkt. In einem sich anschließenden Schritt bewirkt die erfindungsgemäße Steuereinrichtung nach dem Einleiten des ersten Trägermaterials in die erste Kavität eine Bewegung der Schiebereinrichtung in Richtung des Kerns in eine zurückgezogene Lage der Schiebereinrichtung bewirkt, so dass eine zweite Kavität erweitert wird. In einem sich anschließenden weiteren Schritt bewirkt die erfindungsgemäße Steuereinrichtung ein Einleiten eines zweiten Trägermaterials in die zweite Kavität und anschließend ein Einleiten des zweiten Trägermaterials ein Öffnen der Formeinrichtung. Die Entnahme des Formteils kann dann wieder händisch oder auch automatisch (gegebenenfalls initiiert durch die Steuereinrichtung) erfolgen.

Eine Formanlage zur Herstellung eines Formteils mit einer Sichtfläche mit verschiedenen Oberflächenbereichen umfasst eine vorab beschriebene Formeinrichtung und eine erfindungsgemäße Steuereinrichtung.

Wie oben erläutert benötigt die Formeinrichtung nur eine Schiebereinrichtung, die so ausgebildet ist, dass sich in der Endlage der vordere Teil der Schiebereinrichtung einseitig neben dem Kantenpaar in der unmittelbaren Nähe des Kantenpaares befindet, also sich der vordere Teil der Schiebereinrichtung neben dem Kantenpaar nur auf einer Seite erstreckt. Weil hierzu für einen Übergang zwischen zwei benachbarten Formfolien nur ein einfacher, einteiliger Schieber benötigt wird, kann die Formeinrichtung einfacher und kostengünstiger als beim oben genannten Stand der Technik aufgebaut sein. Zudem werden Toleranzen, die beim Einlegen von benachbarten Formfolien zwangsläufig auftreten, im Unterschied zu dem oben genannten Stand der Technik bei dem neuen Verfahren ausgeglichen.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen bzw. Beschreibungsteilen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Die Formfolien können im Prinzip auf verschiedene Weise hergestellt sein, sofern sie die für den erfindungsgemäßen Einsatz benötigte Formstabilität aufweisen. Bevorzugt werden Formfolien verwendet, die durch ein Tiefziehverfahren, besonders bevorzugt durch ein Tiefziehverfahren mit anschließender Bearbeitung von Kanten der Formfolien, insbesondere durch Schneiden, Stanzen oder Fräsen, hergestellt wurden. Vorzugsweise können daher im Rahmen des erfindungsgemäßen Verfahrens in einem vorangestellten Schritt zunächst zumindest ein Teil der Formfolien, die dann in die Form eingesetzt werden, durch ein solches Tiefziehverfahren, gegebenenfalls mit anschließender Bearbeitung von Kanten, hergestellt werden.

Bevorzugt werden das erste Trägermaterial in die erste Kavität und das zweite Trägermaterial in die zweite Kavität in erwärmten Zustand eingeleitet, so dass eine thermoplastische Verbindung zwischen dem ersten Trägermaterial und dem zweiten Trägermaterial bewirkt wird. Wie erwähnt sind das erste und das zweite Trägermaterial vorzugsweise identisch. Jedoch ist dies nicht zwingend so.

Das Einleiten des ersten und des zweiten Trägermaterials kann unmittelbar nacheinander erfolgen. Es erfolgt aber bevorzugt in einem kurzen zeitlichen Abstand hintereinander. Die Wartezeit nach dem Einleiten des ersten Trägermaterial und vor dem Einleiten des zweiten Trägermaterial ist so eingestellt, dass sich das erste Trägermaterial bereits soweit stabilisiert hat, dass es sich nicht mehr verformt, wenn der Schieber aus der Formeinrichtung zurückgezogen wird, aber andererseits noch in einem Zustand ist, beispielsweise ausreichend warm bzw. heiß ist, so dass eine gute stoffschlüssige Verbindung zum zweiten Trägermaterial erreicht wird. Besonders bevorzugt beträgt der zeitliche Abstand mindestens 0,1 Sekunden und/oder maximal 2 Sekunden, ganz besonders bevorzugt maximal 1,6 Sekunden. Dies kann aber von den verwendeten Materialien und den eingestellten Werkzeugtemperaturen abhängig sein.

Besonders bevorzugt ist das erfindungsgemäße Verfahren dadurch gekennzeichnet, dass nach dem Einleiten des zweiten Trägermaterials in die zweite Kavität und vor dem Öffnen der Formeinrichtung ein weiteres Trägermaterial in die Formeinrichtung, bevorzugt mit hohem Druck eingeleitet wird. Meist und auch hier bevorzugt, ist das weitere Trägermaterial identisch zum ersten und/oder zweiten Trägermaterial. In der Spritzgießtechnik wird dieser Druck über weiteres Trägermaterial auch als "Nachdruck" bezeichnet. Hierdurch wird in vorteilhafter Weise die mechanische Verbindung zwischen den Formfolien verbessert. Weiterhin können durch das weitere Trägermaterial sog. Einfallstellen auf der Sichtfläche des Formteils reduziert oder vermieden werden. Bevorzugt ist das erfindungsgemäße Verfahren so ausgestaltet, dass der Druck beim Einleiten des weiteren Trägermaterials höher ist als beim Einleiten des ersten Trägermaterials und/oder höher ist als beim Einleiten des zweiten Trägermaterials.

Alternativ oder zusätzlich zum Einleiten eines weiteren Trägermaterials, können zur Verdichtung auch eine oder mehrere zusätzliche Schiebereinrichtungen genutzt werden, die sich vom Kern in Richtung Matrize bewegen (sogenanntes "Spritzprägen").

Ebenso kann eine Formeinrichtungen mit sogenannter "Tauchkante" genutzt werden, bei der Kern und Matrize zunächst während des Einspritzens des ersten und zweiten Trägermaterials noch nicht ganz aufeinander gepresst sind und dann, um das bereits eingeleitete Trägermaterial zu verdichten, Kern und Matrize vollständig aufeinander zu bewegt werden.

Auch eine Kombination der verschiedenen Varianten zur Verdichtung ist möglich.

Vorzugsweise werden die Formfolien so auf der Matrize angeordnet, dass die erste Formfolie eine größere räumliche Ausdehnung als die zweite Formfolie, insbesondere in deren Hauptausdehnungsrichtungen aufweist. Letztlich kann die Entscheidung, wie genau die Anordnung der Formfolien in der Matrize erfolgt, in Abhängigkeit von der Empfindlichkeit der Formfolie und/oder der Bauteilgeometrie bestimmt werden.

Bevorzugt wird nach dem Schließen der Formeinrichtung und vor dem Einleiten des ersten Trägermaterials in die erste Kavität die Schiebereinrichtung gegenüber dem Kern in Richtung der Matrize bewegt bis die Endlage der Schiebereinrichtung erreicht ist. Alternativ und ohne Beschränkung des erfindungsgemäßen Verfahrens ist es ebenso denkbar, dass vor dem Schließen der Formeinrichtung und vor dem Einleiten des ersten Trägermaterials in die erste Kavität die Schiebereinrichtung gegenüber dem Kern in Richtung der Matrize bewegt wird, bis die Endlage der Schiebereinrichtung erreicht ist. Die Bewegung der Schiebereinrichtung kann beispielsweise durch Federeinrichtungen, hydraulische Einrichtungen, elektromotorische Einrichtungen, mechanische Einrichtungen, pneumatische Einrichtungen oder auch durch manuelle Interaktion eines Operators der Formeinrichtung bewirkt werden.

Bei einer bevorzugten Variante des Verfahrens wird eine Schiebereinrichtung eingesetzt, bei der Kantenbereiche des vorderen Teils der Schiebereinrichtung scharfkantig ausgeführt sind. Ist die Schiebereinrichtung dann während des Einspritzens des zweiten Trägermaterials in den Kern zurückgezogen, so schließt die Stirnseite der Schiebereinrichtung mit dem umgebenden Kern eben ab, d.h. es gibt keinen Versatz, insbesondere keine Vertiefung entlang einer Kante zwischen dem Schieber und der umgebenden Kernoberfläche. Dies reduziert die Gefahr, dass sich auf der empfindlichen Oberfläche der Sichtseite des Formteils diese Vertiefung oder der Versatz im späteren Produkt abzeichnen kann.

Bei einer bevorzugten Variante des Verfahrens sind daher alle Kantenbereiche, des vorderen Teils der Schiebereinrichtung scharfkantig ausgeführt, insbesondere dann, wenn eine besonders glatte und gegebenenfalls noch glänzende Sichtfläche des Formteils erreicht werden soll, auf der sich jede Unebenheit leicht abzeichnet.

In Abhängigkeit von den im jeweiligen Fall gewünschten Oberflächen und den verwendeten Materialien und den Prozessparametern (beispielsweise der Formstabilität der Formfolien, den jeweiligen Spritzdrücken, etc.) kann jedoch bei anderen bevorzugten Ausgestaltungen des Verfahrens auch eine Schiebereinrichtung eingesetzt werden, bei der der vordere Teil der Schiebereinrichtung bewusst eine Abrundung oder eine Fase aufweist, die so ausgebildet ist, dass sie in der Endlage der Schiebereinrichtung zum Kantenpaar hin ausgerichtet ist. Eine derartige Fase kann in vorteilhafter Weise verhindern, dass die zweite Formfolie, insbesondere deren umgebogener Kantenbereich, beschädigt wird, wenn nach dem Schließen der Formeinrichtung die Stirnseite der Schiebereinrichtung die zweite Formfolie auf der Matrize fixiert. Weiterhin kann es durch eine Fase möglich werden, die Schiebereinrichtung näher am Kantenpaar zu positionieren. Dadurch kann eine verbesserte Stabilisierung des Kantenpaars beim Einleiten des ersten Trägermaterials erzielt werden. Die Fase ist dabei so an der Schiebereinrichtung angeordnet, dass sie sich nach dem Schließen der Formeinrichtung in unmittelbarer Nähe des Kantenpaares befindet. Neben einer Fase kann die Schiebereinrichtung im Bereich der Stirnseite der Schiebereinrichtung auch eine Abrundung oder auch mehrere Abfasungen aufweisen, um vergleichbare Vorteile zu erzielen.

Ebenso kann auch in Abhängigkeit von den im jeweiligen Fall gewünschten Oberflächen und verwendeten Materialien und Prozessparametern der Abstand des vorderen Teils der Schiebereinrichtung in Richtung des Kantenpaares gewählt bzw. eingestellt werden.

Wie erwähnt kann es bei manchen Formfolien bzw. Formteilen von Vorteil sein, wenn das Kantenpaar der Formfolien seitlich im vorderen Bereich direkt an der Schiebereinrichtung anliegt.

Je nach Formfolien bzw. Formteil kann aber auch bewusst ein kleiner Abstand vorteilhafter sein. Bevorzugt beträgt dann der Abstand zwischen der Schiebereinrichtung und der zweiten Formfolie in Richtung des Kantenpaares, nach dem Schließen der Formeinrichtung und vor dem Einleiten des ersten Trägermaterials in die erste Kavität, mindestens 0,01 mm. Andererseits beträgt der Abstand bevorzugt maximal 1 mm, besonders bevorzugt maximal 0,5 mm.

Wird dafür gesorgt, dass zunächst ein sehr kleiner Spalt zwischen dem Schieber und dem Kantenpaar besteht, so kann das weitere Verhalten von den gewählten Prozessparametern während des Einleitens bzw. Einspritzens des ersten Trägermaterials und der genauen Geometrie der Formfolien und des Formteils, der Flexibilität der Formfolien im Bereich der Kanten und/oder den genauen Abmessungen des Spalts abhängen.

So kann beispielsweise dafür gesorgt werden, dass bewusst das Kantenpaar bereits vom ersten Trägermaterial von drei Seiten eingeschlossen wird, d.h. also eine dünne Schicht Trägermaterial in den Spalt zwischen Schiebereinrichtung und Kantenpaar gelangt, und so einen besonders festen Verbund mit hoher Formgenauigkeit - auch im weiteren Spritzgießprozess - gebildet wird.

Ebenso bevorzugt kann aber auch dafür gesorgt werden, dass bewusst beim Einleiten des ersten Trägermaterials das Kantenpaar gegen die Schiebereinrichtung gedrückt wird und somit an der Schiebereinrichtung abstützt. Dies kann zu einer besonders sauberen Farbtrennung führen.

Bei einer bevorzugten Variante ist dafür gesorgt, dass die umgebogene Kante der ersten Formfolie, d. h. die von der Schiebereinrichtung entferntere Kante des Kantenpaares, länger ist (d.h. sich etwas mehr in Richtung des Kerns erstreckt) als die Kante der zweiten Formfolie, d. h. als die näher an der Schiebereinrichtung liegende Kante des Kantenpaars. Dieser "Überstand" der einen Kante über die andere Kante des Kantenpaares kann dabei relativ gering sein. Bevorzugt ist ein Überstand von maximal 1 mm, besonders bevorzugt ca. 0,5 mm.

Da die "längere" Kante des Kantenpaars beim Einleiten des ersten Trägermaterials zuerst vom Trägermaterial erreicht wird, kann dies dazu führen, dass der "Überstand", welche ja nicht durch die zweite Kante des Kantenpaares unterstützt wird, leicht über die Nahtstelle zwischen den beiden Kanten gedrückt wird und so die Gefahr des Eindringens von Trägermaterial zwischen die Kanten reduziert oder eliminiert und gegebenenfalls auch unterstützt, dass das Kantenpaar gegen die Schiebereinrichtung gedrückt wird.

Wie oben erwähnt, können die Kantenbereiche der Formfolien, welche dann in der Formeinrichtung voreinander liegen und so das Kantenpaar bilden, in beliebiger Weise nach hinten umgebogen sein. Bevorzugt ist es so, dass der umgebogene Kantenbereich mindestens einer Formfolie einen Rundungsinnenradius aufweist, der minimal 0,01 mm und/oder maximal 1 mm, besonders bevorzugt maximal 0,5 mm. Der Außenradius ist in der Regel um die Dicke der Folie größer als der Rundungsinnenradius. Grundsätzlich könnte die Innenkante auch scharfkantig sein.

Häufig eingesetzte Formfolien weisen eine Dicke von minimal 0,2 mm, besonders bevorzugt von minimal 0,3 mm, auf. Die Dicke kann bevorzugt maximal 2 mm, besonders bevorzugt maximal 1,0 mm, ganz besonders bevorzugt maximal 0,7 mm, betragen.

Die Länge der umgebogenen Kante der Formfolien in Richtung des Kerns der Formeinrichtung bzw. später in das gefertigte Formteil hinein (also die Abmessung des Kantenabschnitts der Formfolie in Richtung von der Formfolie im Wesentlichen senkrecht nach hinten weg in das Formteil hinein) beträgt jeweils bevorzugt maximal das 6-fache, weiter bevorzugt maximal das 4-fache, weiter bevorzugt maximal das 3-fache, der Dicke der verwendeten Formfolie. Bevorzugt beträgt die Länge der umgebogenen Kante der Formfolien in Richtung des Kerns der Formeinrichtung mindestens das 2-fache der Dicke der verwendeten Formfolie.

Vorzugsweise ragen die Kanten der Formfolien später nur bis in das gefertigte Formteil hinein und erstrecken sich nicht durch dieses hindurch. D.h. die Länge der umgebogenen Kante und die Dicke der Formfolien betragen zusammen jeweils weniger als die Dicke der auszuspritzenden Kavität (also die Abmessung der Kavität, die sich im Wesentlichen senkrecht zur Erstreckung der Sichtfläche des zu fertigenden Formteils erstreckt) bzw. der Dicke des zu fertigenden Formteils. Besonders bevorzugt beträgt die Länge der umgebogenen Kante der Formfolien jeweils zusammen mit der Dicke der Formfolie jeweils maximal 3/4, weiter besonders bevorzugt maximal die Hälfte, der Dicke der auszuspritzenden Kavität. D. h. die Enden der umgebogenen Kanten der Formfolien befinden sich später im Wesentlichen (weit) im Inneren des gefertigten Formteils und ragen nicht (wie eine auf der Rückseite des Formteils sichtbare erhabene Grenzlinie, die dem Verlauf der Grenze zwischen den Oberflächenbereichen der Sichtseite entspricht) aus der hinteren Oberfläche des Formteils heraus, egal ob mit Material umspritzt oder nicht. Die Form der Rückseite des Formteils ist also von der Existenz und dem Verlauf des Kantenpaars unbeeinflusst und kann (ausschließlich) durch andere Konstruktionsbedingungen, wie Anschlussgeometrien zur Kopplung mit anderen Bauteilen etc., vorgegeben werden. Bevorzugt beträgt die Länge der umgebogenen Kante der Formfolien jeweils zusammen mit der Dicke der Formfolie mindestens 1/4, besonders bevorzugt mindestens 1/3, der Dicke der auszuspritzenden Kavität.

Die Fixierung der Formfolien auf bzw. in der Matrize kann auf unterschiedliche Weise erfolgen. Dabei kann die optimale Fixierungsart im konkreten Anwendungsfall insbesondere auch von der Formstabilität und/oder der Form der jeweiligen Formfolie sowie der Form selber aber auch von weiteren Prozessparametern abhängen.

Bevorzugt weist die Matrize der Formeinrichtung eine Anzahl an Matrizenkavitäten (d. h. eine oder mehrere) zur Aufnahme der Formfolien auf. Besonders bevorzugt ist zumindest eine Matrizenkavität dabei so ausgestaltet, dass die erste und/oder die zweite Formfolie nach der Anordnung auf der Matrize vorwiegend durch die mechanische Spannung der Formfolie auf der Matrize bzw. in den Matrizenkavitäten fixiert sind.

Alternativ oder zusätzlich können die Matrize und/oder der Kern der Formeinrichtung vorzugsweise auch mindestens eine Fixiereinrichtung umfassen, welche eine Fixierung mindestens einer der Formfolien auf bzw. in der Matrize bewirkt. Derartige Fixiereinrichtungen können dabei beweglich sowohl in der Matrize als auch im Kern starr oder stationär ausgeführt sein. Solche Fixiereinrichtungen können vorwiegend mit metallischen Materialien umgesetzt sein.

Auch die Formfolien selber können aus unterschiedlichen Materialien oder demselben Grundmaterial hergestellt sein. Bevorzugte Materialien bzw. Grundmaterialien für die Formfolien umfassen Materialien der Gruppe Acrylnitril-Butadien-Styrol (ABS), Polycarbonat (PC) oder Polymethylmethacrylat (PMMA) oder eine Kombination bzw. Kombinationen dieser Materialien.

Auch wenn dasselbe Grundmaterial verwendet wird, ist es natürlich sinnvoll, wenn die Formfolien durch einseitigen, oder auch zweiseitigen Farbauftrag und/ oder durch Zugabe irgendeines Zusatzes, beispielsweise ein unterschiedliches Pigment oder dergleichen, voneinander unterscheidbar gemacht werden, so dass die verschiedenen Oberflächenbereiche auch als solche erkannt werden und vorzugsweise Farbkontraste entstehen. Ebenso wäre es aber auch möglich, die Struktur der Oberflächenbereiche also, der Sichtseite der Formfolien anders zu wählen, oder die Werkzeug-Oberfläche ganz oder teilweise mit bestimmten Strukturen zu versehen, die bei der Produktion der Formteile auf die Oberfläche der Formfolien übertragen wird.

Eine weitere Möglichkeit ist die Einstellung des Transmissionsgrads für Licht. In diesem Fall sollte die Formfolie ein hohen Transmissionsgrad aufweisen und das dahinter gespritzte Material ebenso. Formteile mit einem hohen Transmissionsgrad für Licht eignen sich in besonderer Weise für eine rückseitige Beleuchtung mit einer Lichtquelle in der Nähe einer der Sichtfläche abgewandten Oberfläche der in dem Verfahren produzierten Formteile. Damit kann z.B. in Fahrzeugen in vorteilhafter Weise das Ambiente im Fahrzeuginneren günstig beeinflusst werden.

Die erste Formfolie und die zweite Formfolie können einen identischen Transmissionsgrad aufweisen. In einer besonders bevorzugten Variante, weisen zumindest zwei Formfolien einen unterschiedlichen Transmissionsgrad für Licht auf. Beispielsweise ist eine Formfolie vollständig oder nahezu vollständig lichtdicht und die andere ist für Licht transmissiv oder sogar transparent.

Bevorzugt weist dann die zweite Formfolie einen höheren Transmissionsgrad für Licht auf als die erste Formfolie. Eine derartige Zuordnung stellt in vorteilhafter Weise sicher, dass die Schiebereinrichtung diejenige Formfolie auf der Matrize fixiert, die einen höheren Transmissionsgrad besitzt. Das heißt, dass eine nicht immer auszuschließende geringfügige Verschiebung der Formmasse beim Einspritzen des zweiten Trägermaterials in Richtung des ersten Trägermaterials im Trennungsbereich von erster und zweiter Formfolie, die durch die Spritzdrücke innerhalb der plastischen Seele der Formmasse verursacht werden, sind dann durch den späteren Nutzer des Formteils kaum erkennbar, da sich diese "Irritation" im Bereich geringeren Transmissionsgrades befindet.

Eine Formfolie, die einen hohen Transmissionsgrad für Licht aufweist, wird bevorzugt aus einem Trägermaterial mit einem hohen Anteil an Polycarbonat (PC) oder Polymethylmethacrylat (PMMA) hergestellt.

Die Formfolien können - gegebenenfalls auch nur partiell - auch mit Lackschichten auf der Vorder- und/oder der Rückseite mit mehr oder weniger großem Transmissionsgrad (auch blickdichten Materialien) beschichtet werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen schematisch:
- Figur 1: eine erfindungsgemäße Formanlage mit einer erfindungsgemäßen Steuereinrichtung zur Steuerung einer Formeinrichtung sowie einen Schnitt durch ein erstes Ausführungsbeispiel der Formeinrichtung zur Herstellung eines Formteils nach einer ersten Variante des erfindungsgemäßen Verfahren in einem Zustand vor einer Anordnung einer Mehrzahl an Formfolien auf einer Matrize und/oder auf einem Kern,
- Figur 2: einen Schnitt durch das Ausführungsbeispiel der Formeinrichtung zur Herstellung des Formteils nach dem Verfahren wie in Figur 1, jedoch nun in einem Zustand nach einer Anordnung einer ersten und einer zweiten Formfolie auf bzw. in der Matrize,
- Figur 3: einen Schnitt durch das Ausführungsbeispiel der Formeinrichtung zur Herstellung des Formteils nach dem Verfahren wie in Figur 1 und 2, jedoch nun in einem Zustand nach einem Schließen der Formeinrichtung durch Annäherung der Matrize und des Kerns,
- Figur 4: einen Schnitt durch das Ausführungsbeispiel der Formeinrichtung zur Herstellung des Formteils nach dem Verfahren wie in den Figuren 1 bis 3, jedoch nun in einem Zustand mit einer Endlage einer Schiebereinrichtung, bei der eine Stirnseite der Schiebereinrichtung die zweite Formfolie gegen die Matrize drückt,
- Figur 5: einen Schnitt durch das Ausführungsbeispiel der Formeinrichtung zur Herstellung des Formteils nach dem Verfahren wie in den Figuren 1 bis 4, jedoch nun in einem Zustand nach einem Einleiten eines ersten Trägermaterials in eine erste Kavität,
- Figur 6: einen Schnitt durch das Ausführungsbeispiel der Formeinrichtung zur Herstellung des Formteils nach dem Verfahren wie in den Figuren 1 bis 5, jedoch nun in einem Zustand nach einer Bewegung der Schiebereinrichtung in Richtung des Kerns in eine zurückgezogene Lage der Schiebereinrichtung,
- Figur 7: einen Schnitt durch das Ausführungsbeispiel der Formeinrichtung zur Herstellung des Formteils nach dem Verfahren wie in den Figuren 1 bis 6, jedoch nun in einem Zustand nach einem Einleiten eines zweiten Trägermaterials in eine zweite Kavität,
- Figur 8: einen Schnitt durch das Ausführungsbeispiel der Formeinrichtung zur Herstellung des Formteils nach dem Verfahren wie in den Figuren 1 bis 7, jedoch nun in einem Zustand nach einem Einleiten eines weiteren Trägermaterials,
- Figur 9: einen Schnitt durch das Ausführungsbeispiel der Formeinrichtung zur Herstellung des Formteils nach dem Verfahren wie in den Figuren 1 bis 8, jedoch nun in einem Zustand nach einem Öffnen der Formeinrichtung,
- Figur 10: einen Schnitt durch das Ausführungsbeispiel der Formeinrichtung zur Herstellung des Formteils nach dem Verfahren wie in den Figuren 1 bis 9, jedoch nun in einem Zustand nach einer Entnahme des Formteils aus der Formeinrichtung,
- Figur 11: einen Schnitt durch ein weiteres Ausführungsbeispiel einer erfindungsgemäßen Formeinrichtung ähnlich der in Figur 1 zur Herstellung eines Formteils nach einer zweiten Variante des erfindungsgemäßen Verfahrens, nun in einem Zustand nach einer Anordnung einer ersten Formfolie auf der Matrize und einer Anordnung einer zweiten Formfolie auf dem Kern,
- Figur 12: einen Schnitt durch das Ausführungsbeispiel der Formeinrichtung wie in Figur 12 zur Herstellung eines Formteils nach einer dritten Variante des erfindungsgemäßen Verfahrens, nun in einem Zustand nach einer Anordnung einer ersten und einer zweiten Formfolie auf der Matrize und einer Anordnung einer dritten Formfolie an einer Stirnseite der Schiebereinrichtung,
- Figur 13: einen schematischen Schnitt durch ein drittes Ausführungsbeispiel einer Formeinrichtung ähnlich Figur 2, zur Herstellung eines Formteils nach dem erfindungsgemäßen Verfahren, nun mit Fixiereinrichtungen zur Fixierung einer Mehrzahl an Formfolien auf der Matrize in einem Zustand nach einer Anordnung einer ersten und einer zweiten Formfolie auf der Matrize.

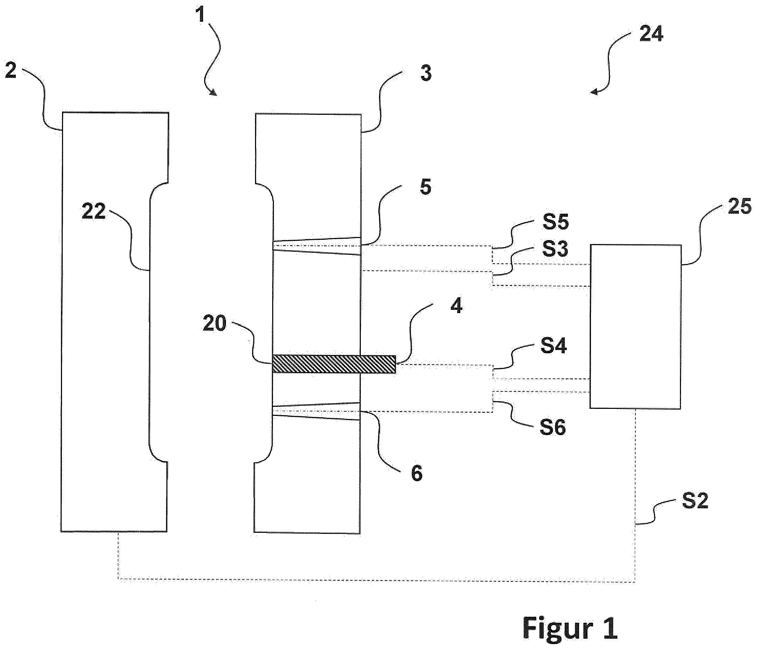

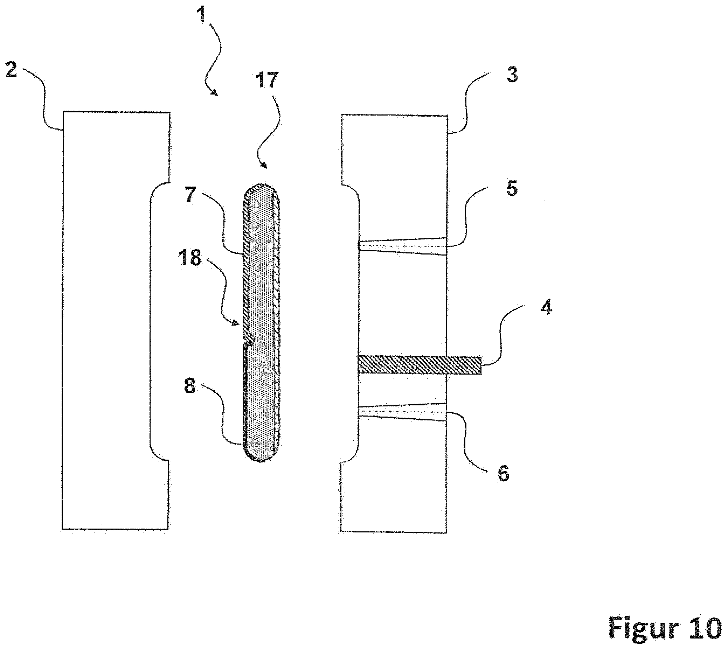

Die Figur 1 zeigt eine erfindungsgemäße Formanlage 24, hier eine Spritzgießanlage 24, mit einer erfindungsgemäßen Steuereinrichtung 25 zur Steuerung einer Formeinrichtung 1 (Spritzgießform) der Spritzgießanlage sowie einen schematischen Schnitt durch ein erstes Ausführungsbeispiel der Formeinrichtung 1 zur Herstellung eines Formteils 17 (siehe Figur 10) nach dem erfindungsgemäßen Verfahren in einem Zustand vor einer Anordnung einer Mehrzahl an Formfolien 7, 8, 19 auf einer Matrize 2 und/oder auf einem Kern 3. Die Formeinrichtung 1 befindet sich dabei in einem geöffneten Zustand bei dem die Matrize 2 und der Kern 3 voneinander beabstandet sind.

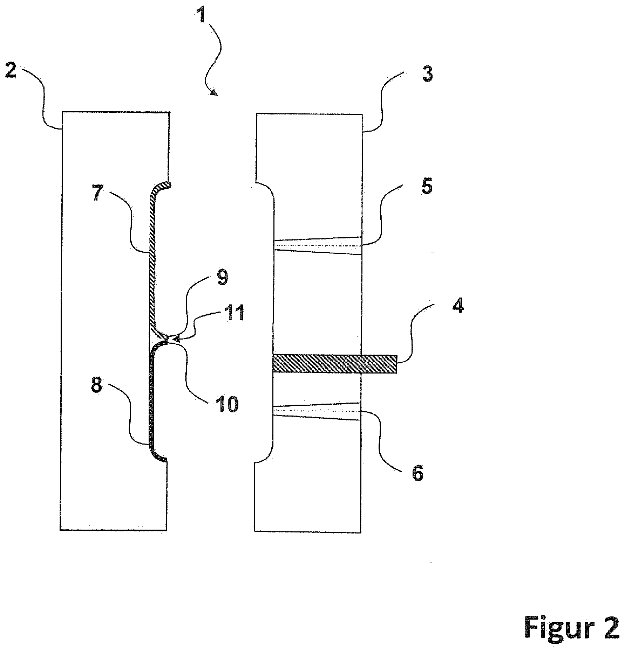

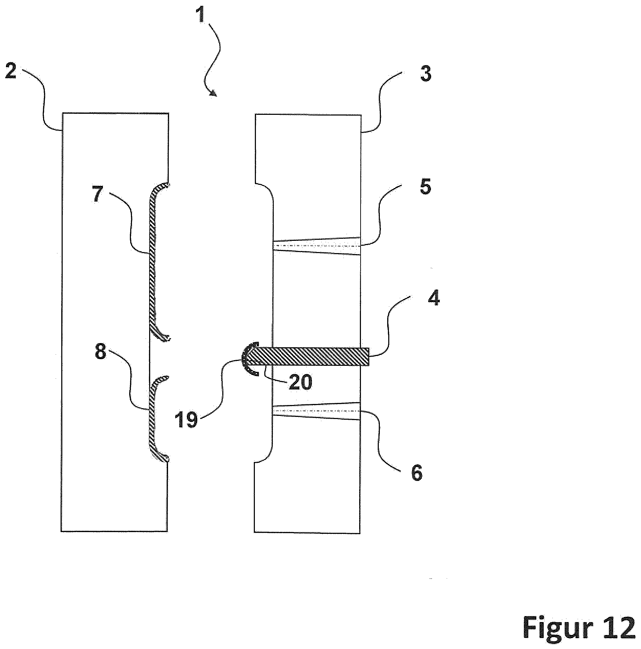

Die Matrize 2 der Formeinrichtung 1 umfasst bevorzugt eine Matrizenkavität 22 welche so ausgebildet ist, dass auf der Matrize 2 in der erfindungsgemäßen Weise Formfolien 7, 8, 19 (siehe z. B. Figuren 2 und 12) angeordnet werden können. Bevorzugt ist die Matrizenkavität 22 so ausgebildet, dass nach einer Anordnung der Formfolien 7, 8, 19 auf der Matrize 22 die Formfolien 7, 8, 19 ohne weitere Verfahren oder Einrichtungen auf der Matrize 22 fixiert sind. Eine derartige Fixierung der Formfolien 7, 8, 19 kann durch eine mechanische Eigenspannung der, noch etwas flexiblen aber insgesamt formstabilen, Formfolien 7, 8, 19 und/oder elektrostatische Kräfte bewirkt werden.

Der Kern 3 der Formeinrichtung 1 umfasst eine erste Düse 5 und eine zweite Düse 6. Die Düsen 5, 6 sind so ausgebildet, dass Trägermaterialien 14, 15, 16 durch die Düsen in eine Formeinrichtung 1 einleitbar sind. Bevorzugt verfügen die Düsen 5, 6 über Einrichtungen, die ein Öffnen und/oder Schließen der Düsen 5, 6 bewirken, so dass über die Düsen 5, 6 das Einleiten des Trägermaterials 14, 15, 16 steuerbar ist. Es handelt sich hierbei um übliche Düsen, wie sie in Spritzgießformen bzw. Spritzgießanlagen eingesetzt werden. Ebenso kann die Zuführung des heißen Materials in der in Spritzgießanlagen üblichen Weise erfolgen.

Weiterhin zeigt die Figur 1 eine Schiebereinrichtung 4 (auch kurz als "Schieber" bezeichnet), die sich zumindest teilweise im Inneren des Kerns 3 der Formeinrichtung 1 befindet. Die Schiebereinrichtung 4 ist dabei gegenüber dem Kern 3 beweglich gelagert. Im Ausführungsbeispiel der Figur 1 ist dabei insbesondere eine Bewegung der Schiebereinrichtung 4 in waagrechter Richtung relativ zum Kern 3 vorgesehen. Die Bewegung der Schiebereinrichtung 4 gegenüber dem Kern 3 kann dabei durch verschiedene Verfahren und Einrichtungen bewirkt werden. Beispielsweise kann die Schiebereinrichtung 4, durch die Steuereinrichtung 25 gesteuert, durch Federeinrichtungen, hydraulische Einrichtungen, elektromotorische Einrichtungen, mechanische Einrichtungen, pneumatische Einrichtungen der Formeinrichtung 1 erzielt werden.

Die jeweils in den Figuren 1 bis 13 gezeigte Anordnung der Formeinrichtung 1, der Matrize 2, des Kerns 3, der Formfolien 7, 8, 19 und weiteren in den Figuren dargestellten Einrichtungen ist dabei ohne einen Bezug auf eine konkrete räumliche Lage bei der Anwendung des erfindungsgemäßen Verfahrens. Bevorzugt kann das erfindungsgemäße Verfahren mit Standard-Spritzgieß-Maschinen umgesetzt werden. Es ist beispielsweise denkbar, dass das erfindungsgemäße Verfahren auf Vertikal-Spritzgießmaschinen umgesetzt wird. Hierbei ist es beispielsweise denkbar, dass die Formfolien 7, 8, 19 bei der Anordnung auf der Matrize 2 und/oder dem Kern 3 in ihrer Hauptausdehnungsrichtung horizontal positioniert sind. Das Einleiten des Trägermaterials 14, 15, 16 kann dann beispielweise vertikal erfolgen, bei dem die Formfolien 7, 8, 19 in ihrer Hauptausdehnungsrichtung horizontal positioniert sind. Möglich sind jedoch auch alle weiteren räumlichen Anordnungen der Einrichtungen der Formeinrichtung 1 und der Formfolien 7, 8, 19 während der Ausführung des erfindungsgemäßen Verfahrens.

Die Figur 1 zeigt wie erwähnt auch ein Ausführungsbeispiel einer erfindungsgemäßen Steuereinrichtung 25 zur Ausführung des erfindungsgemäßen Verfahrens. Mit einem Steuersignal S2 kann dabei die Steuereinrichtung 25 die Matrize 2 steuern, beispielsweise eine Bewegung der Matrize 2 in Richtung des Kerns 3 bewirken. Weiterhin kann die Steuereinrichtung 25 mittels eines Steuersignals S3 den Kern 3 steuern, beispielsweise eine Bewegung des Kerns 3 in Richtung der Matrize 2 bewirken. Darüber hinaus kann die Steuereinrichtung 25 über ein Steuersignal S4 die Schiebereinrichtung 4 steuern, beispielsweise eine Bewegung der Schiebereinrichtung relativ zum Kern 3 bewirken. Darüber hinaus kann die Steuereinrichtung 25 über ein Steuersignal S5 die Düse 5 steuern, beispielsweise ein Öffnen oder Schließen der Düse 5 bewirken. Entsprechend kann die Steuereinrichtung 25 über ein Steuersignal S6 die Düse 6 steuern, beispielsweise ein Öffnen oder Schließen der Düse 6 bewirken.

In den Figuren 2 bis 13 wird zur Wahrung der Übersichtlichkeit auf die Darstellung der erfindungsgemäßen Steuereinrichtung 25 verzichtet.

Zunächst wird in den Figuren 2 bis 10 der weitere Prozess eines Ausführungsbeispiels des erfindungsgemäßen Verfahrens in der Formeinrichtung 1 gemäß Figur 1 dargestellt

Die Figur 2 zeigt hierbei einem Zustand nach einer Anordnung einer ersten Formfolie 7 und einer zweiten Formfolie 8 auf der Matrize 2. Die Anordnung der Formfolien 7, 8 ist hier beispielhaft so erfolgt, dass die Formfolien 7, 8 nebeneinanderliegend angeordnet sind, so dass eine erste Kante 9 eines umgebogenen Kantenbereichs der ersten Formfolie 7 und eine erste Kante 10 eines umgebogenen Kantenbereichs der zweiten Formfolie 8 direkt nebeneinander bzw. voreinander liegen, so dass ein Kantenpaar 11 ausgebildet wird. Bevorzugt sind die Formfolien 7, 8 in der Matrizenkavität 22 so angeordnet, dass sie bevorzugt ohne weitere Verfahren oder Einrichtungen auf der Matrize 22 fixiert sind. Eine derartige Fixierung der Formfolien 7, 8 kann durch eine mechanische Eigenspannung der Formfolien 7, 8 und/oder elektrostatische Kräfte zwischen der Matrize 2 und den Formfolien 7, 8 bewirkt werden. In diesem Zustand befindet sich an der vorderen Seite, der späteren Sichtseite, zwischen den Formfolien 7, 8 noch ein kleiner Spalt, der hier der Übersichtlichkeit wegen übertrieben groß dargestellt ist. Im Laufe des weiteren Verfahrens wird sich dieser Spalt (bzw. die Fuge) weitgehend oder bevorzugt vollständig schließen.

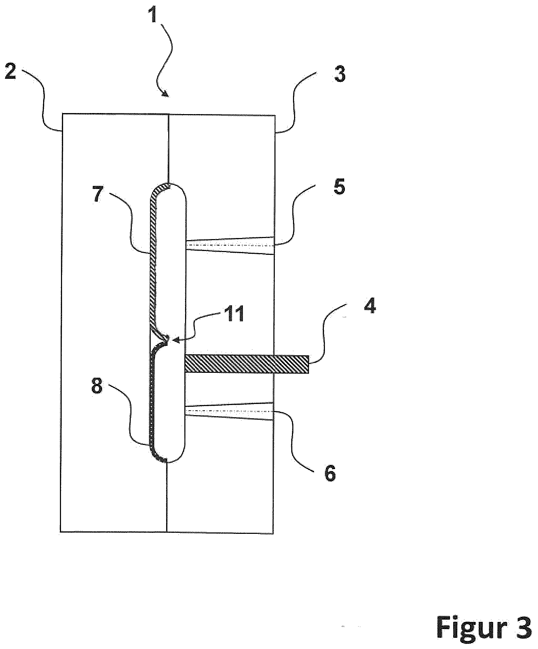

Die Figur 3 zeigt dann den Zustand nach einem Schließen der Formeinrichtung 1 durch Annäherung der Matrize 2 und des Kerns 3. Es ist hierbei unerheblich, ob zum Schließen der Formeinrichtung 1 die Matrize 2 in Richtung des Kerns 3 bewegt wurde oder der Kern 3 in Richtung der Matrize 2 bewegt wurde oder sowohl die Matrize 2 als auch der Kern 3 aufeinander zu bewegt wurden.

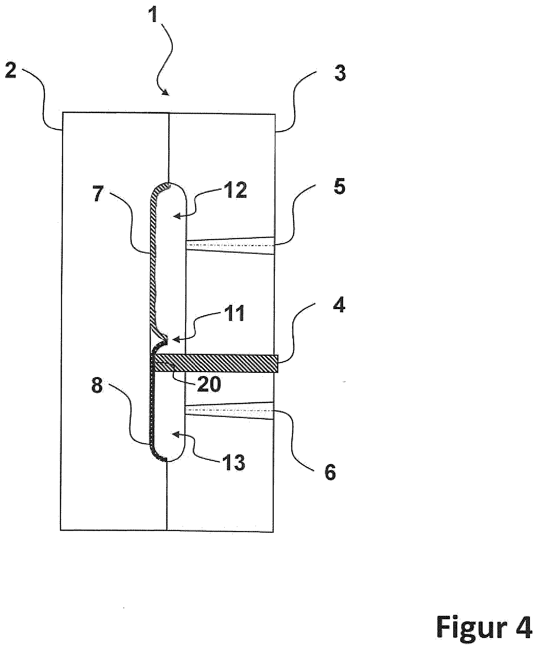

Die Figur 4 zeigt dann den Zustand mit einer Endlage der Schiebereinrichtung 4, bei der eine Stirnseite 20 der Schiebereinrichtung 4 die zweite Formfolie 8 gegen die Matrize 2 drückt. Bevorzugt wird der Druck, mit dem die Schiebereinrichtung 4 die Formfolie 8 gegen die Matrize 2 drückt so gewählt, dass eine sichere Fixierung der Formfolie 8 während des späteren Einleitens der Trägermaterialien 14, 15, 16 gewährleistet wird, ohne jedoch die Formfolie 8, insbesondere die Sichtfläche 18 des Formteils 17 im Bereich der Formfolie 8, zu beschädigen. Beispielsweise kann der Druck durch Federeinrichtungen, hydraulische Einrichtungen, elektromotorische Einrichtungen, mechanische Einrichtungen oder pneumatische Einrichtungen erzielt werden.

Neben der Fixierung der Formfolie 8 auf der Matrize 2 bewirkt die Positionierung der Schiebereinrichtung 4 in ihrer Endlage auch in vorteilhafter Weise eine Unterteilung des Raumes zwischen der Matrize 2 und des Kerns 3 in eine erste Kavität 12 und eine zweite Kavität 13. Die erste Kavität 12 wird dabei im Wesentlichen durch die erste Formfolie 7, einen Teilbereich des Kerns 3, einen Teilbereich der Schiebereinrichtung 4 und gegebenenfalls durch einen kleinen Teilbereich der zweiten Formfolie 8 begrenzt. Darüber hinaus umfasst die erste Kavität 12 das Kantenpaar 11. Ein vorderer Teil der Schiebereinrichtung 4 befindet sich dabei in vorteilhafter Weise in unmittelbarer Nähe des Kantenpaares 11. Auch hier ist der Abstand zwischen dem Schieber und dem Kantenpaar der besseren Anschaulichkeit wegen wieder übertrieben groß dargestellt. Wie in Figur 4 zu sehen ist, befindet sich der vordere Teil der Schiebereinrichtung 4 also einseitig neben dem Kantenpaar 11, d. h. die Schiebereinrichtung 4 verläuft nur entlang einer Seite des Kantenpaars 11 in dessen unmittelbarer Nähe.

Alternativ zu der Ausführung des Verfahrens nach der vorstehenden Beschreibung zu den Figuren 3 und 4 ist es auch möglich, dass die Schiebereinrichtung 4 bereits vor dem Schließen der Formeinrichtung 1 in ihre Endlage positioniert wird, so dass die (leichte) Fixierung bzw. eine erste Positionierung der Formfolie 8 durch die Stirnseite 20 der Schiebereinrichtung 4 durch das Schließen der Formeinrichtung 1 bewirkt wird. Weiterhin ist eine Vielzahl an weiteren Ausführungen des erfindungsgemäßen Verfahrens zur (leichten) Fixierung bzw. Positionierung der Formfolie 8 durch die Stirnseite 20 der Schiebereinrichtung 4 denkbar, beispielsweise ein zeitgleiches Schließen der Formeinrichtung 1 und Bewegung der Schiebereinrichtung 4 in Richtung ihrer Endlage.

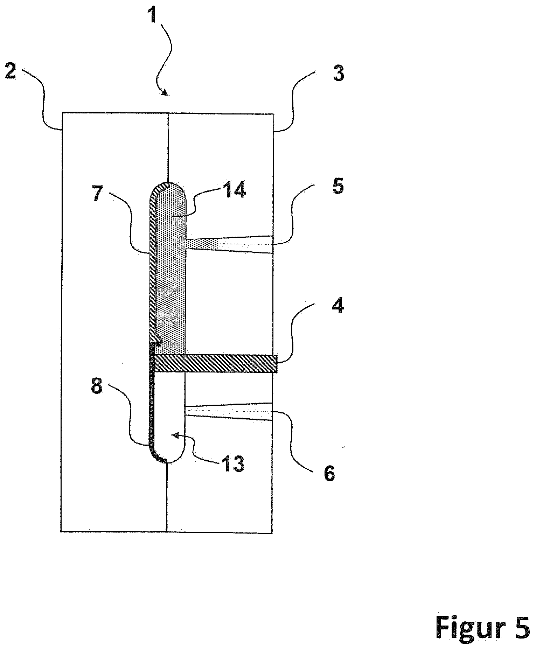

In Figur 5 ist dann ein Zustand nach einem Einleiten bzw. Einspritzens eines ersten Trägermaterials 14 in die erste Kavität 12 durch die erste Düse 5 erreicht. Die erfindungsgemäße Positionierung der Schiebereinrichtung 4 in ihrer Endlage bewirkt in vorteilhafter Weise, dass das Kantenpaar 11 beim Hinterspritzen mit dem Trägermaterial 14 durch die Schiebereinrichtung 4 mechanisch gestützt wird. Dadurch kann im Wesentlichen verhindert werden, dass das Kantenpaar 11 durch das erste Trägermaterial 14 in unerwünschter Weise bewegt oder verbogen wird. So wird erreicht, dass die Sichtfläche 18 des Formteils 17 am Ende der Herstellung durch das erfindungsgemäße Verfahren optisch ansprechende Eigenschaft aufweist. Insbesondere sind mit dem erfindungsgemäßen Verfahren sehr geradlinige und homogene Kanten zwischen den Formfolien 7, 8, 19 auf der Sichtfläche 18 des Formteils 17 erzielbar.

Der Figur 5 ist auch entnehmbar, dass durch das erfindungsgemäße Verfahren in besonders vorteilhafter Weise eine Verringerung des Krümmungsradius des umgebogenen Kantenbereichs der Kante 9 der Formfolie 7 nach dem Einleiten des ersten Trägermaterials 14 erzielt wurde. Ein verringerter Krümmungsradius ist gleichzusetzen mit einer verbesserten Optik oder Haptik des Formteils 17 am Ende des erfindungsgemäßen Herstellungsverfahrens, da dann zwischen den beiden Formfolien 7, 8 nur noch eine optisch oder haptisch nicht oder kaum wahrnehmbare Beabstandung besteht, d.h. der Spalt (bzw. die Fuge) zwischen den Formteilen wird, wie oben bereits erwähnt, geschlossen. In Abhängigkeit vom gewählten Abstand der Schiebereinrichtung 4 von Kantenpaar 11 kann ebenfalls eine vorteilhafte Verringerung des Krümmungsradius des umgebogenen Kantenbereichs der Kante 10 der Formfolie 8 durch das Einleiten von Trägermaterial erzielt werden, insbesondere bei einer späteren Nachverdichtung. Bevorzugt wird die erste Düse 5 nach dem Einleiten des ersten Trägermaterials 14 geschlossen.

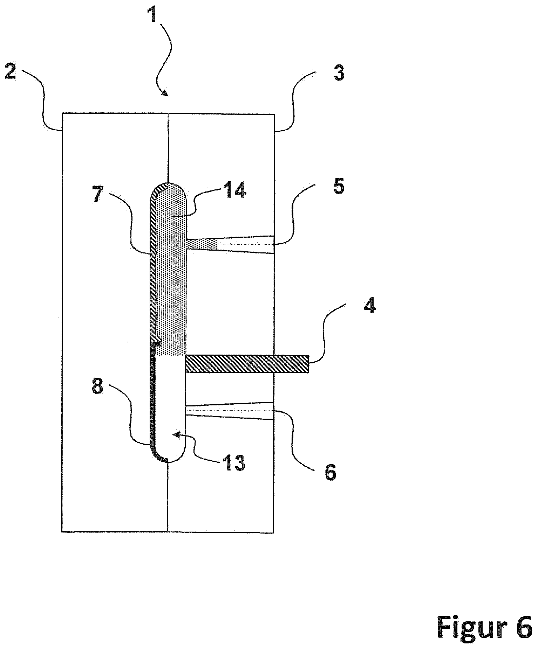

Die Figur 6 zeigt dann einen Zustand nach einer Bewegung der Schiebereinrichtung 4 in Richtung des Kerns 3 in eine zurückgezogene Lage der Schiebereinrichtung 4. Diese Bewegung der Schiebereinrichtung 4 bewirkt, dass die zweite Kavität 13 räumlich erweitert wird. Bevorzugt ist der Zeitpunkt zur Bewegung der Schiebereinrichtung 4 in Richtung des Kerns 3 so gewählt, dass die sich das erste Trägermaterial 14 zumindest geringfügig vor der Bewegung abgekühlt hat, so dass eine ausreichende mechanische Stabilität des Trägermaterials 14 bei der Bewegung der Schiebereinrichtung 4 in Richtung des Kerns 3 gewährleistet ist.

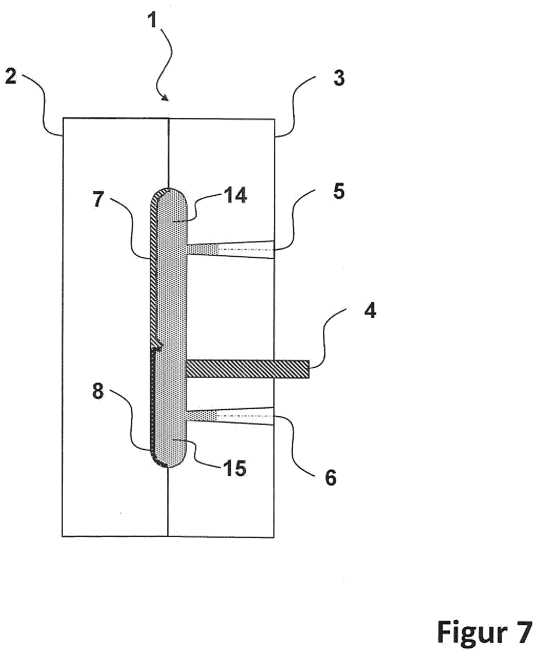

Die Figur 7 zeigt dann weiter den Zustand nach einem Einleiten eines zweiten Trägermaterials 15 in die zweite Kavität 13 durch die zweite Düse 6. Bevorzugt ist der Zeitpunkt des Einleitens des zweiten Trägermaterials 15 so gewählt, dass das erste Trägermaterial 14 noch eine Temperatur aufweist, die für eine thermoplastische Verbindung zwischen dem ersten Trägermaterial 14 und dem zweiten Trägermaterial 15 ausreichend ist. In diesem Ausführungsbeispiel sind das erste und das zweite Trägermaterial 14, 15 identisch.

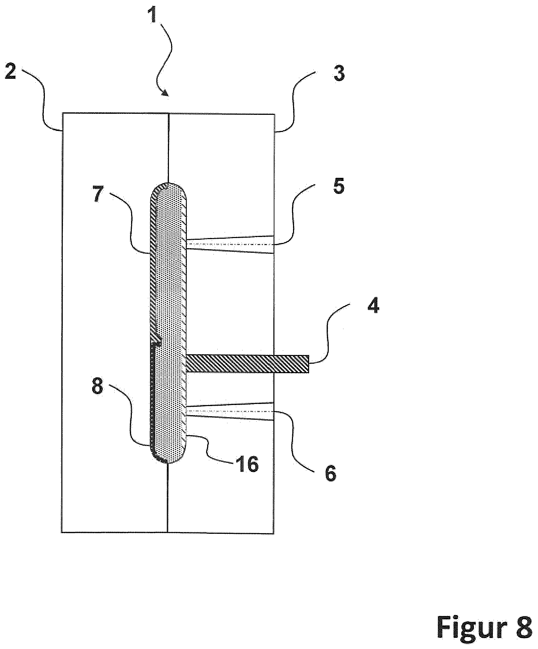

Die Figur 8 illustriert den Zustand nach einem Einleiten weiteren Trägermaterials 16 mit besonders hohem Druck. Dieser Verfahrensschritt wird üblicherweise auch als "Nachdruck" bezeichnet. Hierdurch wird in vorteilhafter Weise die mechanische Verbindung zwischen den Formfolien 7, 8 verbessert. Weiterhin können durch das weitere Trägermaterial 16 sog. Einfallstellen auf der Sichtfläche 18 des Formteils 17 reduziert oder vermieden werden.

Das weitere Trägermaterial 16 ist dabei vorzugsweise dasselbe wie in den vorherigen Schritten, auch wenn es in den Figuren der Anschaulichkeit wegen unterschiedlich dargestellt ist.

Das weitere Trägermaterial 16 kann dabei durch die erste Düse 5 oder durch die zweite Düse 6 oder, was bevorzugt ist, auch durch beide Düsen 5, 6 eingeleitet werden. Besonders bevorzugt wird die zweite Düse 6 nach dem Einleiten des zweiten Trägermaterials 15 zunächst geschlossen. Anschließend werden die erste Düse 5 und die zweite Düse 6 geöffnet, um das weitere Trägermaterial 16 einzuleiten. Nach dem Einleiten des weiteren Trägermaterials 16 werden beide Düsen 5, 6 geschlossen.

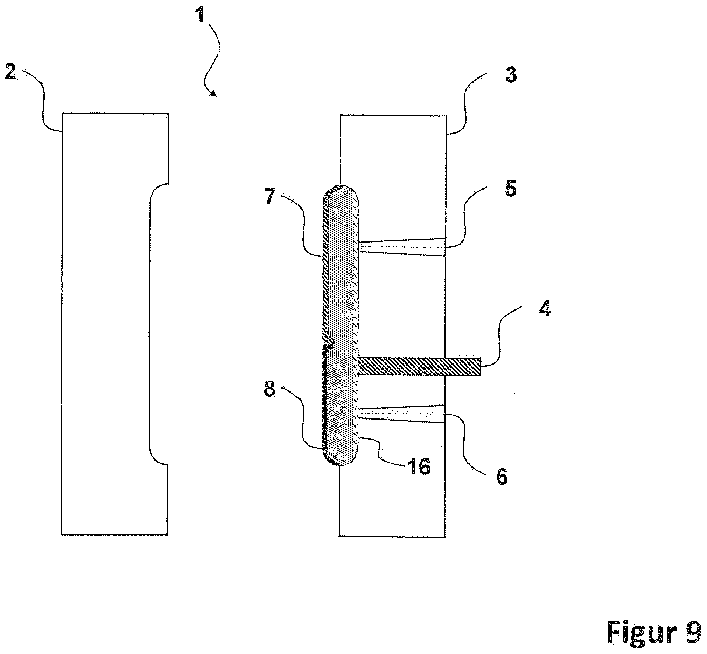

Die Figur 9 zeigt dann den Zustand nach einem Öffnen der Formeinrichtung 1. Das Öffnen der Formeinrichtung 1 kann durch eine räumliche Bewegung der Matrize 2 weg vom Kern 3, durch eine räumliche Bewegung des Kerns 3 weg von der Matrize 3 oder durch eine gleichzeitige Bewegung der Matrize 2 und des Kerns 3 bewirkt werden. Im Ausführungsbeispiel der Figur 9 verbleibt das Formteil 17 zunächst auf dem Kern 3. Es ist jedoch ohne Einschränkung der Erfindung auch möglich, dass das Formteil 17 nach dem Öffnen der Formeinrichtung 1 zunächst auf der Matrize 2 verbleibt.

Die Figur 10 zeigt schließlich einem Zustand nach einer Entnahme des Formteils 17 mit einer Sichtfläche 18 aus der Formeinrichtung 1. Die Entnahme des Formteils 17 kann dabei manuell durch einen Operator der Formeinrichtung 1 oder beispielsweise durch die Verwendung von Entnahmegeräten mit mechanischen Greifern bzw. Saugern erfolgen. Besonders bevorzugt wird das Formteil 17 mechanisch durch die Schiebereinrichtung 4 oder weitere in der Matrize 2 oder dem Kern 3 befindliche Schiebereinrichtungen entnommen bzw. aus der Formeinrichtung 1 herausgestoßen oder herausgedrückt.

Im Zusammenhang mit Figur 10 kann auch darauf hingewiesen werden, dass die umgebogenen Kanten 9, 10 bzw. das Kantenpaar 11 der Formfolien 7, 8 nur geringfügig in das gefertigte Formteil 17 hineinragen, hier zu weniger als 1/3 der Dicke des Formteils 17. Die Längen der umgebogenen Kanten 9, 10 der Formfolien 7, 8 in Richtung des Kerns 3 der Formeinrichtung 1 (siehe auch die vorherigen Figuren) bzw. in das gefertigte Formteil 17 hinein betragen jeweils hier nur in etwa das doppelte Maß der Formfoliendicke.

Bevorzugt sollte diese Länge maximal das 7-fache der Dicke der verwendeten Formfolie betragen, also z. B. bei einer Verwendung von 0,3 mm dicken Formfolien sollten sich die Kanten maximal 2,1 mm in das Formteil hinein erstrecken. Typische Dicken eines fertigen Formteils sind 2,0 mm-3,5mm.

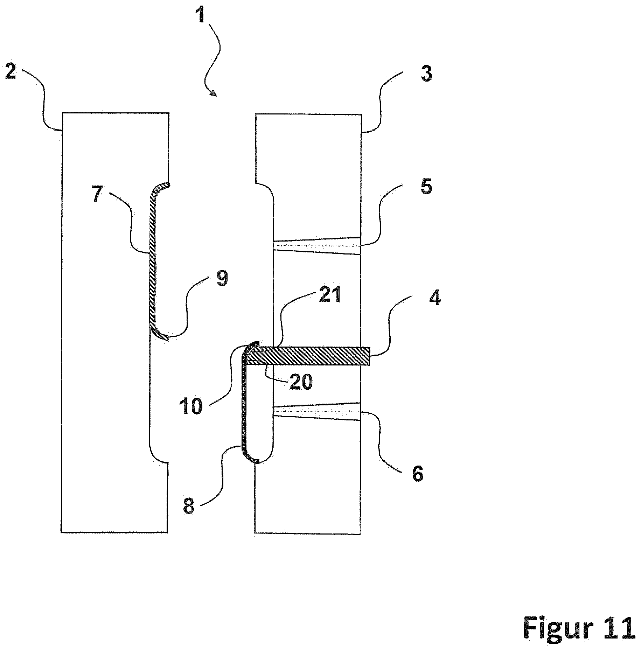

Die Figur 11 zeigt einen schematischen Schnitt durch ein etwas modifiziertes Ausführungsbeispiel der Formeinrichtung 1 zur Herstellung des Formteils nach dem erfindungsgemäßen Verfahren ähnlich wie in Figur 1, jedoch nun in einem Zustand nach einer Anordnung einer ersten Formfolie 7 auf der Matrize 2 und einer Anordnung einer zweiten Formfolie 8 auf dem Kern 3. Bevorzugt wird die zweite Formfolie 8 wie in Figur 11 dargestellt durch die Schiebereinrichtung 4 auf dem Kern 3 fixiert. Dabei ragt die Schiebereinrichtung 4 aus dem Kern 3 hervor oder befindet sich bereits in ihrer Endlage. Das Kantenpaar 11 der beiden Formfolien 7, 8 wird hierbei erst durch das sich anschließende Schließen der Formeinrichtung 1 ausgebildet. Nach dem Schließen der Formeinrichtung 1 ergibt sich wiederum eine Anordnung, die weitestgehend der Figur 4 entspricht. Alle weiteren Schritte des erfindungsgemäßen Verfahrens sind dann entsprechend der Beschreibung zu den Figuren 5 bis 10 ausführbar.

Die Figur 11 zeigt zusätzlich eine Ausführungsform der Schiebereinrichtung 4, bei der der vordere Teil der Schiebereinrichtung 4 im Bereich der Stirnseite 20 eine Fase 21 aufweist. Eine derartige Fase 21 kann in vorteilhafter Weise verhindern, dass die zweite Formfolie 8, insbesondere deren umgebogener Kantenbereich, beschädigt wird, wenn nach dem Schließen der Formeinrichtung 1 die Stirnseite 20 der Schiebereinrichtung 4 die zweite Formfolie 8 auf der Matrize 2 fixiert. Weiterhin ist es durch die Fase 21 möglich, die Schiebereinrichtung 4 noch näher am Kantenpaar 11 zu positionieren. Dadurch kann eine verbesserte Stabilisierung des Kantenpaars 11 beim Einleiten des ersten Trägermaterials 14 erzielt werden. Die Fase 21 ist dabei so an der Schiebereinrichtung angeordnet, dass sie sich nach dem Schließen der Formeinrichtung 1 in unmittelbarer Nähe des Kantenpaares 11 befindet. Neben der in Figur 11 gezeigten Fase 21 kann die Schiebereinrichtung 4 im Bereich der Stirnseite 20 eine Abrundung oder auch mehrere Abfasungen aufweisen um vergleichbare Vorteile zu erzielen.

Die Figur 12 zeigt wieder einen schematischen Schnitt durch das modifizierte Ausführungsbeispiel der Formeinrichtung 1 nach Figur 11. Hier erfolgt als weiteres Beispiel für ein erfindungsgemäßes Verfahren eine Anordnung einer ersten Formfolie 7 und einer zweiten Formfolie 8 auf der Matrize 2 und eine Anordnung einer dritten Formfolie 19 an einer Stirnseite 20 der Schiebereinrichtung 4. Durch das sich anschließende Schließen der Formeinrichtung 1 werden Kantenpaare zwischen der ersten Formfolie 7 und der dritten Formfolie 19 sowie zwischen der dritten Formfolie 19 und der zweiten Formfolie 8 ausgebildet. Die Schiebereinrichtung 4 kann dann in vorteilhafter Weise beide Kantenpaare beim Einleiten von Trägermaterial mechanisch stützen und so die vorstehend genannten Vorteile bewirken. Eine der Figur 12 entsprechende Anordnung erlaubt es in vorteilhafter Weise, Formteile 17 herzustellen, die dreiteilige und/oder dreifarbige Sichtflächen 18 aufweisen.

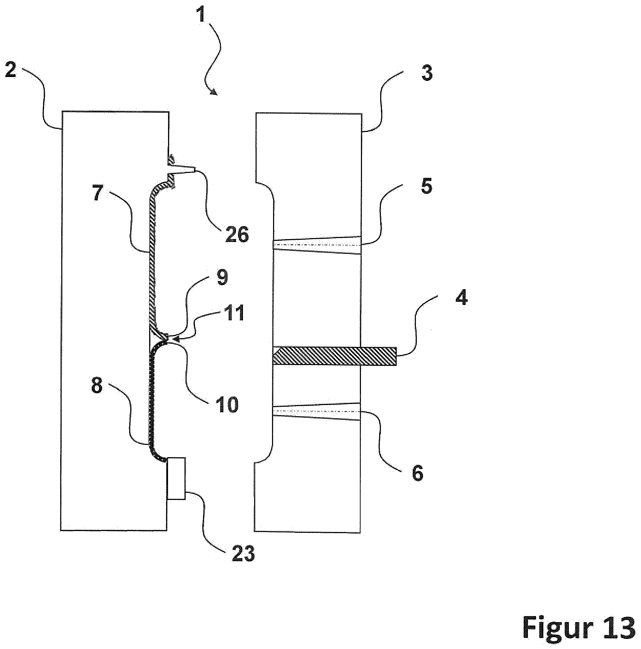

Die Figur 13 stellt einen schematischen Schnitt durch ein drittes Ausführungsbeispiel einer Formeinrichtung 1 zur Herstellung eines Formteils 17 nach dem erfindungsgemäßen Verfahren dar. Diese Formeinrichtung 1 ist zusätzlich mit Fixiereinrichtungen 23, 26 zur Fixierung der ersten Formfolie 7 und der zweiten Formfolie 8 auf der Matrize 2 in einem Zustand nach einer Anordnung der Formfolien 7, 8 auf der Matrize 2 ausgestattet. Nach dem Schließen der Formeinrichtung 1 ergibt sich wiederum eine Anordnung, die weitestgehend der Figur 4 entspricht. Alle weiteren Schritte des erfindungsgemäßen Verfahrens sind dann entsprechend der Beschreibung zu den Figuren 5 bis 10 ausführbar.

Die Fixiereinrichtung 23 ist dabei beweglich ausgeführt, um eine Anordnung der zweiten Formfolie 8 auf der Matrize 2 zu erleichtern. Die Fixiereinrichtung 26 dagegen ist starr ausgeführt und ist bevorzugt ein Bestandteil der Matrize 2. Eine derartige Fixiereinrichtung 26 kann dabei in verschiedenen Arten ausgeführt sein, beispielsweise als konisch sich verjüngender Dorn. Darüber hinaus können entsprechend Fixiereinrichtungen 23, 26 auch auf dem Kern 3 oder auf der Matrize 2 und dem Kern 3 angeordnet sein. Die Fixiereinrichtungen 23, 26 sind hier nur grob schematisch dargestellt. Es ist klar, dass diese Fixiereinrichtungen 23, 26 und/oder die Matrize 2 und/oder der Kern 3 dann entsprechend so ausgebildet sind, dass sich die Formeinrichtung 1 noch schließen lässt, beispielsweise die Fixiereinrichtungen an der Matrize 2 in Ausnehmungen (nicht dargestellt) im Kern 3 verschwinden.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So ist es beispielsweise möglich, dass die Formfolien gedruckte Leiterbahnen, und/oder stromführende Schichten, und/oder lichtführende Schichten umfassen, so dass sich in dem erfindungsgemäßen Formteil dekorative und funktionale Aspekte in vorteilhafter Weise vereinen lassen. Weiterhin können auch die oben beschriebenen besonderen Merkmale der Varianten gegebenenfalls auch miteinander kombiniert werden. Zudem schließt die Verwendung der unbestimmten Artikel "ein" bzw. "eine" nicht aus, dass die betreffenden Merkmale auch mehrfach vorhanden sein können.

### Bezugszeichenliste

- 1: Formeinrichtung
- 2: Matrize
- 3: Kern
- 4: Schiebereinrichtung
- 5: erste Düse
- 6: zweite Düse
- 7: erste Formfolie
- 8: zweite Formfolie
- 9: erste Kante eines umgebogenen Kantenbereichs der ersten Formfolie 7
- 10: erste Kante eines umgebogenen Kantenbereichs der zweiten Formfolie 8
- 11: Kantenpaar
- 12: erste Kavität
- 13: zweite Kavität
- 14: erstes Trägermaterial
- 15: zweites Trägermaterial
- 16: weiteres Trägermaterial
- 17: Formteil
- 18: Sichtfläche des Formteils 17
- 19: dritte Formfolie
- 20: Stirnseite der Schiebereinrichtung 4
- 21: Fase der Schiebereinrichtung 4
- 22: Matrizenkavität
- 23: Bewegliche Fixiereinrichtung
- 24: Formanlage / Spritzgießanlage
- 25: Steuereinrichtung
- 26: Stationäre Fixiereinrichtung
- S2: Steuersignal zur Steuerung der Matrize 2
- S3: Steuersignal zur Steuerung des Kerns 3
- S4: Steuersignal zur Steuerung der Schiebereinrichtung 4
- S5: Steuersignal zur Steuerung der ersten Düse 5
- S6: Steuersignal zur Steuerung der zweiten Düse 6

## Patentansprüche

1. Verfahren zur Herstellung eines Formteils (17) mit einer Sichtfläche (18) mit verschiedenen Oberflächenbereichen, wobei das Verfahren mit Hilfe einer Formeinrichtung (1) durchgeführt wird, welche eine Matrize (2) und einen Kern (3) mit einer beweglichen Schiebereinrichtung (4) umfasst, **gekennzeichnet durch** folgende Verfahrensschritte:
- Anordnung einer Mehrzahl an Formfolien (7, 8, 19), welche jeweils mindestens einen umgebogenen Kantenbereich aufweisen, auf der Matrize (2) und/oder auf dem Kern (3) derart, dass nach einem Schließen der Formeinrichtung (1) mindestens zwei Formfolien (7, 8) nebeneinanderliegend angeordnet sind, so dass eine erste Kante (9) des umgebogenen Kantenbereichs einer ersten Formfolie (7) und eine erste Kante (10) des umgebogenen Kantenbereichs einer zweiten Formfolie (8) zumindest abschnittsweise direkt nebeneinander liegen, so dass ein Kantenpaar (11) ausgebildet wird,
- Schließen der Formeinrichtung (1) durch Annäherung der Matrize (2) und des Kerns (3), so dass am Ende des Schließens eine Mehrzahl an Kavitäten (12, 13) entsteht, wobei eine erste Kavität (12) das Kantenpaar (11) umfasst und wobei am Ende des Schließens in einer Endlage der Schiebereinrichtung (4) sich ein vorderer Teil der Schiebereinrichtung (4) in unmittelbarer Nähe des Kantenpaares (11) befindet und eine Stirnseite (20) der Schiebereinrichtung (4) die zweite Formfolie (8) auf der Matrize (2) fixiert,
- Einleiten eines ersten Trägermaterials (14) in die erste Kavität (12),
- Bewegung der Schiebereinrichtung (4) in Richtung des Kerns (3) in eine zurückgezogene Lage der Schiebereinrichtung (4), so dass eine zweite Kavität (13) erweitert wird,
- Einleiten eines zweiten Trägermaterials (15) in die zweite Kavität (13),
- Öffnen der Formeinrichtung (1),
- Entnahme des Formteils (17) aus der Formeinrichtung (1).

2. Verfahren nach Anspruch 1, **dadurch gekennzeichnet, dass** das erste Trägermaterial (14) in die erste Kavität (12) und das zweite Trägermaterial (15) in die zweite Kavität (13) in erwärmten Zustand eingeleitet werden, bevorzugt in einem kurzen zeitlichen Abstand hintereinander eingeleitet werden, so dass eine thermoplastische Verbindung zwischen dem ersten Trägermaterial (14) und dem zweiten Trägermaterial (15) bewirkt wird.

3. Verfahren nach Anspruch 1 oder Anspruch 2, **dadurch gekennzeichnet, dass** nach dem Einleiten des zweiten Trägermaterials (15) in die zweite Kavität (13) und vor dem Öffnen der Formeinrichtung (1) ein weiteres Trägermaterial (16) in die Formeinrichtung (1), bevorzugt mit hohem Druck eingeleitet wird.

4. Verfahren nach einem der Ansprüche 1 bis 3, **dadurch gekennzeichnet, dass** die Formfolien (7, 8) so auf der Matrize (2) angeordnet werden, dass die erste Formfolie (7) eine größere räumliche Ausdehnung als die zweite Formfolie (8), insbesondere in deren Hauptausdehnungsrichtungen aufweist.

5. Verfahren nach einem der Ansprüche 1 bis 4, **dadurch gekennzeichnet, dass** nach dem Schließen der Formeinrichtung (1) und vor dem Einleiten des ersten Trägermaterials (14) in die erste Kavität (12) die Schiebereinrichtung (4) gegenüber dem Kern (3) in Richtung der Matrize (2) bewegt wird bis die Endlage der Schiebereinrichtung (4) erreicht ist.

6. Verfahren nach einem der Ansprüche 1 bis 5, **dadurch gekennzeichnet, dass** eine Schiebereinrichtung (4) eingesetzt wird, bei der der vordere Teil der Schiebereinrichtung eine Abrundung oder eine Fase (21) aufweist, die so ausgebildet ist, dass sie in der Endlage der Schiebereinrichtung (4) zum Kantenpaar (11) hin ausgerichtet ist.

7. Verfahren nach einem der Ansprüche 1 bis 6, **dadurch gekennzeichnet, dass** eine Schiebereinrichtung (4) eingesetzt wird, bei der Kantenbereiche, bevorzugt alle Kantenbereiche des vorderen Teils der Schiebereinrichtung (4) scharfkantig ausgeführt sind.

8. Verfahren nach einem der Ansprüche 1 bis 7, **dadurch gekennzeichnet, dass** nach dem Schließen der Formeinrichtung (1) und vor dem Einleiten des ersten Trägermaterials (14) in die erste Kavität (12) zwischen der Schiebereinrichtung (4) und der zweiten Formfolie (8) in Richtung des Kantenpaares (11) ein Abstand, bevorzugt von minimal 0,01 mm, besonders bevorzugt 0,02 mm, und/oder bevorzugt von maximal 1,0 mm, besonders bevorzugt maximal 0,5 mm, besteht.

9. Verfahren nach einem der Ansprüche 1 bis 8, **dadurch gekennzeichnet, dass** der umgebogene Kantenbereich mindestens einer Formfolie (7, 8, 19) einen Rundungsinnenradius aufweist, der vorzugsweise minimal 0,01 mm und/oder maximal 1,0 mm beträgt.

10. Verfahren nach einem der Ansprüche 1 bis 9, **dadurch gekennzeichnet, dass** die Matrize (2) der Formeinrichtung (1) eine Anzahl an Matrizenkavitäten (22) zur Aufnahme der Formfolien (7, 8, 19) aufweist.

11. Verfahren nach einem der Ansprüche 1 bis 10, **dadurch gekennzeichnet, dass** die Matrize (2) der Formeinrichtung (1) mindestens eine Fixiereinrichtung (23, 26) umfasst. welche eine Fixierung mindestens einer der Formfolien (7, 8, 19) auf der Matrize (2) bewirkt.

12. Verfahren nach einem der Ansprüche 1 bis 11, **dadurch gekennzeichnet, dass** die erste Formfolie (7) einen niedrigeren Transmissionsgrad für Licht als die zweite Formfolie (8) aufweist.

13. Formteil (17), erhältlich durch ein Verfahren nach einem der Ansprüche 1 bis 12.

14. Steuereinrichtung (25) zur Steuerung einer Formeinrichtung (1), welche eine Matrize (2) und einen Kern (3) mit einer beweglichen Schiebereinrichtung (4) umfasst, zur Herstellung eines Formteils (17) mit einer Sichtfläche (18) mit verschiedenen Oberflächenbereichen, im Rahmen eines Herstellungsprozesses, bei dem eine Mehrzahl an Formfolien (7, 8, 19), welche jeweils mindestens einen umgebogenen Kantenbereich aufweisen, auf der Matrize (2) und/oder auf dem Kern (3) angeordnet werden, so dass nach einem Schließen der Formeinrichtung (1) mindestens zwei Formfolien (7, 8, 19) nebeneinanderliegend angeordnet sind, so dass eine erste Kante (9) des umgebogenen Kantenbereichs einer ersten Formfolie (7) und eine erste Kante (10) des umgebogenen Kantenbereichs einer zweiten Formfolie (8) zumindest abschnittsweise direkt nebeneinander liegen, so dass ein Kantenpaar (11) ausgebildet wird, wobei die Steuereinrichtung (25) so ausgebildet ist, dass folgende Verfahrensschritte bewirkt werden:
- Schließen der Formeinrichtung (1) durch Annäherung der Matrize (2) und des Kerns (3), so dass am Ende des Schließens eine Mehrzahl an Kavitäten (12, 13) entsteht, wobei eine erste Kavität (12) das Kantenpaar (11) umfasst und wobei am Ende des Schließens in einer Endlage der Schiebereinrichtung (4) sich ein vorderer Teil der Schiebereinrichtung (4) in unmittelbarer Nähe des Kantenpaares (11) befindet und eine Stirnseite (20) der Schiebereinrichtung (4) die zweite Formfolie (8) auf der Matrize (2) fixiert,
- nach dem Schließen der Formeinrichtung (1) ein Einleiten eines ersten Trägermaterials (14) in die erste Kavität (12),
- nach dem Einleiten des ersten Trägermaterials (14) in die erste Kavität (12) eine Bewegung der Schiebereinrichtung (4) in Richtung des Kerns (2) in eine zurückgezogene Lage der Schiebereinrichtung (4), so dass eine zweite Kavität (13) erweitert wird,
- nach der Bewegung der Schiebereinrichtung (4) in Richtung des Kerns (3) ein Einleiten eines zweiten Trägermaterials (15) in die zweite Kavität (13),
- nach dem Einleiten des zweiten Trägermaterials (15) ein Öffnen der Formeinrichtung (1).

15. Formanlage (24) zur Herstellung eines Formteils (17) mit einer Sichtfläche (18) mit verschiedenen Oberflächenbereichen, wobei die Formanlage (24) eine Formeinrichtung (1) und eine Steuereinrichtung (25) nach Anspruch 14 umfasst.

## Claims

1. A method for producing a moulded part (17) with a visible surface (18) with different surface regions, wherein the method is carried out with the aid of a moulding device (1), which comprises a die (2) and a core (3) with a mobile slider (4), **characterised by** the following process steps:
- arrangement of a plurality of moulding films (7, 8, 19), which each comprise at least one folded-over edge region, on the die (2) and/or on the core (3), in such a way that at least two moulding films (7, 8) are arranged lying side-by-side after closure of the moulding device (1), so that a first edge (9) of the folded-over edge region of a first moulding film (7) and a first edge (10) of the folded-over edge region of a second moulding film (8) lie directly beside one another at least in sections, so that an edge pair (11) is formed,
- closure of the moulding device (1) by causing the die (2) and the core (3) to approach one another, so that a plurality of cavities (12, 13) arises at the end of the closure, wherein a first cavity (12) comprises the edge pair (11) and wherein at the end of the closure in an end position of the slider (4) a front part of the slider (4) is located in the immediate vicinity of the edge pair (11) and a front side (20) of the slider (4) fixes the second moulding film (8) on the die (2),
- introduction of a first carrier material (14) into the first cavity (12),
- movement of the slider (4) in the direction of the core (3) into a retracted position of the slider (4), so that a second cavity (13) is widened,
- introduction of a second carrier material (15) into the second cavity (13),
- opening of the moulding device (1),
- removal of the moulded part (17) from the moulding device (1).

2. The method according to claim 1, **characterised in that** the first carrier material (14) is introduced into the first cavity (12) and the second carrier material (15) is introduced into the second cavity (13) in a heated state, preferably with a short time interval one after the other, so that a thermoplastic connection between the first carrier material (14) and the second carrier material (15) is brought about.

3. The method according to claim 1 or claim 2, **characterised in that**, after the introduction of the second carrier material (15) into the second cavity (13) and before the opening of the moulding device (1), a further carrier material (16) is introduced into the moulding device (1), preferably at high pressure.

4. The method according to any one of claims 1 to 3, **characterised in that** the moulding films (7, 8) are arranged on the die (2) in such a way that the first moulding film (7) has a larger spatial extension than the second moulding film (8), in particular in its main extension directions.

5. The method according to any one of claims 1 to 4, **characterised in that**, after closure of the moulding device (1) and before the introduction of the first carrier material (14) into the first cavity (12), the slider (4) is moved towards the core (3) in the direction of the die (2) until the end position of the slider (4) is reached.

6. The method according to any one of claims 1 to 5, **characterised in that** a slider (4) is used, in which the front part of the slider has a curvature or bevel (21), which is constituted such that in the end position of the slider (4) it is aligned towards the edge pair (11).

7. The method according to any one of claims 1 to 6, **characterised in that** a slider (4) is used, in which edge regions, preferably all edge regions, of the front part of the slider (4) are constituted sharp-edged.

8. The method according to any one of claims 1 to 7, **characterised in that**, after closure of the moulding device (1) and before the introduction of the first carrier material (14) into the first cavity (12), a distance, preferably of at least 0.01 mm, particularly preferably 0.02 mm, and/or preferably of at most 1.0 mm, particularly preferably at most 0.5 mm, is present between the slider (4) and the second moulding film (8) in the direction of the edge pair (11).

9. The method according to any one of claims 1 to 8, **characterised in that** the folded-over edge region of at least one moulding film (7, 8, 19) has an inner curvature radius which preferably amounts to at least 0.01 mm and/or and most 1.0 mm.

10. The method according to any one of claims 1 to 9, **characterised in that** the die (2) of the moulding device (1) comprises a number of die cavities (22) for receiving the moulding films (7, 8, 19).

11. The method according to any one of claims 1 to 10, **characterised in that** the die (2) of the moulding device (1) comprises at least one fixing device (23, 26), which brings about fixing of at least one of the moulding films (7, 8, 19) on the die (2).

12. The method according to any one of claims 1 to 11, **characterised in that** the first moulding film (7) has a lower degree of light transmission than the second moulding film (8).

13. A moulded part (17), obtainable by a method according to any one of claims 1 to 12.

14. A control device (25) for controlling a moulding device (1), which comprises a die (2) and a core (3) with a mobile slider (4), for producing a moulded part (17) with a visible surface (18) with different surface regions, in the context of a production process in which a plurality of moulding films (7, 8, 19), which each have at least one folded-over edge region, are arranged on the die (2) and/or on the core (3), so that at least two moulding films (7, 8, 19) are arranged lying side-by-side after closure of the moulding device (1), so that a first edge (9) of the folded-over region of a moulding film (7) and a first edge (10) of the folded-over edge region of a second moulding film (8) lie directly beside one another at least in sections, so that an edge pair (11) is formed, wherein the control device (25) is constituted such that the following process steps are brought about:
- closure of the moulding device (1) by causing the die (2) and the core (3) to approach one another, so that a plurality of cavities arises at the end of the closure, wherein a first cavity (12) comprises the edge pair (11) and wherein at the end of the closure in an end position of the slider (4) a front part of the slider (4) is located in the immediate vicinity of the edge pair (11) and a front side (20) of the slider (4) fixes the second moulding film (8) on the die (2),
- introduction of a first carrier material (14) into the first cavity (12) after closure of the moulding device (1),
- movement of the slider (4) in the direction of the core (2) into a retracted position of the slider (4) after introduction of the first carrier material (14) into the first cavity (12), so that a second cavity (13) is widened,
- introduction of a second carrier material (15) into the second cavity (13) after movement of the slider (4) in the direction of the core (3),
- opening of the moulding device (1) after introduction of the second carrier material (15).

15. A moulding installation (24) for producing a moulded part (17) with a visible surface (18) with different surface regions, wherein the moulding installation (24) comprises a moulding device (1) and a control device (25) according to claim 14.

## Revendications

1. Procédé, destiné à fabriquer une pièce moulée (17) pourvue d'une surface visible (18) dotée de différentes zones superficielles, le procédé étant réalisé à l'aide d'un dispositif de formage (1) lequel comprend une matrice (2) et un noyau (3) pourvu d'un dispositif pousseur (4) mobile, **caractérisé par** les étapes de procédé suivantes, consistant à :
- placer une multiplicité de films de formage (7, 8, 19), lesquels comportent chacun au moins une zone de bordure recourbée sur la matrice (2) et/ou sur le noyau (3) de telle sorte qu'après une fermeture du dispositif de formage (1), au moins deux films de formage (7, 8) soit placés côte à côte, de sorte qu'un premier bord (9) de la zone de bordure recourbée d'un premier film de formage (7) et un premier bord (10) de la zone de bordure recourbée d'un deuxième film de formage (8) soient placés directement côte à côte au moins par endroits, de sorte à former une paire de bords (11),
- fermer le dispositif de formage (1) en rapprochant la matrice (2) et le noyau (3), de sorte à donner naissance à l'achèvement de la fermeture, à une multiplicité de cavités (12, 13), une première cavité (12) comprenant la paire de bords (11) et à l'achèvement de la fermeture, dans une position finale du dispositif pousseur (4), une partie avant du dispositif pousseur (4) se trouvant à proximité directe de la paire de bords (11) et une face frontale (20) du dispositif pousseur (4) fixant le deuxième film de formage (8) sur la matrice (2),
- introduire une première matière porteuse (14) dans la première cavité (12),
- déplacer le dispositif pousseur (4) en direction du noyau (3), dans une position en retrait du dispositif pousseur (4), de sorte à élargir une deuxième cavité (13),
- introduire une deuxième matière porteuse (15) dans la deuxième cavité (13),
- ouvrir le dispositif de formage (1),
- retirer la pièce moulée (17) du dispositif de formage (1).

2. Procédé selon la revendication 1, **caractérisé en ce que** l'on introduit successivement la première matière porteuse (14) dans la première cavité (12) et la deuxième matière porteuse (15) dans la deuxième cavité (13) à l'état chauffé, de préférence dans un intervalle temporaire court, de sorte à provoquer une liaison thermoplastique entre la première matière porteuse (14) et la deuxième matière porteuse (15).

3. Procédé selon la revendication 1 ou la revendication 2, **caractérisé en ce qu'**après l'introduction de la deuxième matière porteuse (15) dans la deuxième cavité (13) et avant l'ouverture du dispositif de formage (1), on introduit, de préférence sous haute pression, une matière porteuse (16) additionnelle dans le dispositif de formage (1).

4. Procédé selon l'une quelconque des revendications 1 à 3, **caractérisé en ce qu'**on place les films de formage (7, 8) sur la matrice (2), de telle sorte que le premier film de formage (7) fasse preuve d'une extension spatiale supérieure à celle du deuxième film de formage (8), notamment dans ses directions d'extension principales.

5. Procédé selon l'une quelconque des revendications 1 à 4, **caractérisé en ce qu'**après la fermeture du dispositif de formage (1) et avant l'introduction de la première matière porteuse (14) dans la première cavité (12), on déplace le dispositif pousseur (4) par rapport au noyau (3) en direction de la matrice (2), jusqu'à l'atteinte de la position finale du dispositif pousseur (4).

6. Procédé selon l'une quelconque des revendications 1 à 5, **caractérisé en ce qu'**on met en œuvre un dispositif pousseur (4) sur lequel la partie avant du dispositif pousseur comporte un arrondi ou un chanfrein (21) qui est conçu de telle sorte que dans la position finale du dispositif pousseur (4), il soit orienté vers la paire de bords (11).

7. Procédé selon l'une quelconque des revendications 1 à 6, **caractérisé en ce qu'**on met en œuvre un dispositif pousseur (4) sur lequel des zones de bordure, de préférence toutes les zones de bordure de la partie avant du dispositif pousseur (4) sont réalisées avec des arêtes vives.

8. Procédé selon l'une quelconque des revendications 1 à 7, **caractérisé en ce qu'**après la fermeture du dispositif de formage (1) et avant l'introduction de la première matière porteuse (14) dans la première cavité (12), il reste entre le dispositif pousseur (4) et le deuxième film de formage (8) dans la direction de la paire de bords (11) un écart, de préférence d'un minimum de 0,01 mm, de manière particulièrement préférentielle, de 0,02 mm, et/ou de préférence d'un maximum de 1,0 mm, de manière particulièrement préférentielle, d'un maximum de 0,5 mm.

9. Procédé selon l'une quelconque des revendications 1 à 8, **caractérisé en ce que** la zone de bordure recourbée d'au moins un film de formage (7, 8, 19) présente un rayon intérieur d'arrondi qui s'élève de préférence au minimum à 0,01 mm et/ou au maximum à 1,0 mm.

10. Procédé selon l'une quelconque des revendications 1 à 9, **caractérisé en ce que** la matrice (2) du dispositif de formage (1) comporte un nombre de cavités de matrice (22) destinées à recevoir les films de formage (7, 8, 19).

11. Procédé selon l'une quelconque des revendications 1 à 10, **caractérisé en ce que** la matrice (2) du dispositif de formage (1) comprend au moins un système de fixation (23, 26), lequel provoque une fixation d'au moins l'un des films de formage (7, 8, 19) sur la matrice (2).

12. Procédé selon l'une quelconque des revendications 1 à 11, **caractérisé en ce que** le premier film de formage (7) fait preuve d'une transmittance de lumière plus faible que celle du deuxième film de formage (8).

13. Pièce moulée (17), susceptible d'être obtenue par un procédé selon l'une quelconque des revendications 1 à 12.

14. Système de commande (25), destiné à commander un dispositif de formage (1), lequel comprend une matrice (2) et un noyau (3) pourvu d'un dispositif pousseur (4) mobile, pour la fabrication d'une pièce moulée (17) pourvue d'une surface visible (18) dotée de différentes zones superficielles, dans le cadre d'un processus de fabrication lors duquel on place sur la matrice (2) et/ou sur le noyau (3) une multiplicité de films de formage (7, 8, 19), lesquels comportent chacun au moins une zone de bordure recourbée, de telle sorte qu'après une fermeture du dispositif de formage (1), au moins deux films de formage (7, 8, 19) soient placés côte à côte, de sorte qu'un premier bord (9) de la zone de bordure recourbée d'un premier film de formage (7) et un premier bord (10) de la zone de bordure recourbée d'un deuxième film de formage (8) soit placés directement côte à côte au moins par endroits, de sorte à former une paire de bords (11), le système de commande (25) étant conçu de sorte à induire les étapes de procédé suivantes, consistant à:
- fermer le dispositif de formage (1) en rapprochant la matrice (2) et le noyau (3), de sorte à donner naissance à l'achèvement de la fermeture à une multiplicité de cavités, une première cavité (12) comprenant la paire de bords (11) et à l'achèvement de la fermeture, dans une position finale du dispositif pousseur (4), une partie avant du dispositif pousseur (4) se trouvant à proximité directe de la paire de bords (11) et une face frontale (20) du dispositif pousseur (4) fixant le deuxième film de formage (8) sur la matrice (2),
- après la fermeture du dispositif de formage (1), introduire une première matière porteuse (14) dans la première cavité (12),
- après l'introduction de la première matière porteuse (14) dans la première cavité (12), déplacer le dispositif pousseur (4) en direction du noyau (2) dans une position en retrait du dispositif pousseur (4), de sorte à élargir une deuxième cavité (13),
- après le déplacement du dispositif pousseur (4) en direction du noyau (3), introduire une deuxième matière porteuse (15) dans la deuxième cavité (13),
- après l'introduction de la deuxième matière porteuse (15), ouvrir le dispositif de formage (1).

15. Installation de formage (24), destinée à fabriquer une pièce moulée (17) pourvue d'une surface visible (18), dotée de plusieurs zones superficielles, l'installation de formage (24) comprenant un dispositif de formage (1) et un système de commande (25) selon la revendication 14.
